# EUROPÄISCHE PATENTSCHRIFT

(11) **EP 2 087 056 B1**
(45) Veröffentlichungstag und Bekanntmachung des Hinweises auf die Patenterteilung: **25.05.2011**
(21) Anmeldenummer: 07822289.0
(22) Anmeldetag: 07.11.2007
(51) Int. Cl.: C09J 7/00, C09J 7/02, C09J 109/02

(54) **HITZE-AKTIVIERT VERKLEBBARES FLÄCHENELEMENT**
HEAT-ACTIVATED ADHESIVE-BONDABLE SHEET-LIKE ELEMENT
ÉLÉMENT PLAT DOTÉ D'UN ADHÉSIF ACTIVÉ THERMIQUEMENT

(30) Priorität: 21.11.2006 DE 102006055093
(43) Veröffentlichungstag der Anmeldung: 12.08.2009
(73) Patentinhaber: TESA SE, 20253 Hamburg (DE)
(72) Erfinder: HUSEMANN, Marc, 22605 Hamburg (DE); HANNEMANN, Frank, 22047 Hamburg (DE); KOOP, Matthias, 22848 Norderstedt (DE)
(86) Internationale Anmeldenummer: PCT/EP2007/061975
(87) Internationale Veröffentlichungsnummer: WO 2008/061882

(56) Entgegenhaltungen:
- EP-A- 0 284 564
- US-A- 6 054 509

## Beschreibung

Die Erfindung betrifft ein Hitze-aktiviert verklebbares Flächenelement mit einer ersten Klebemasse und einer zweiten Klebemasse sowie die Verwendung dieses Flächenelements zur Verklebung eines Objekts mit Metalloberfläche mit einem Objekt mit Kunststoffoberfläche. Ferner betrifft die Erfindung die Verklebung von Dekorationselementen an Elektronikgeräten, ein Dekorationselement mit einem solchen Flächenelement sowie ein Elektronikgerät mit einem solchen Flächenelement.

Zum Verbinden von Objekten mit Metalloberflächen mit Objekten mit Kunststoffoberflächen werden häufig doppelseitig klebende Flächenelemente wie etwa Klebeetiketten, Klebebänder, Klebefolien oder dergleichen eingesetzt siehe z.B. EP-A-0284564. Um unterschiedliche Materialien fest miteinander verbinden zu können, ist es dabei erforderlich, dass beide Flächen des Flächenelements jeweils unterschiedliche Klebemassen aufweisen, die auf den jeweiligen Haftgrund abgestimmt sind. So ist eine Klebemasse, die eine stabile Verklebung auf einer Metalloberfläche gestattet, in der Regel für die Verklebung auf Kunststoffen allenfalls bedingt geeignet und umgekehrt.

Sind die zu verbindenden Flächen relativ groß, lassen sich großflächige Flächenelemente einsetzen, die beidseitig mit Haftklebemassen ausgerüstet sind. Aufgrund der großen Klebefläche ist die so erzielte Fixierung und Befestigung der Metallbauteile an den Kunststoffelementen hinreichend stabil.

Sind jedoch kleinere Teile miteinander zu verbinden - beispielsweise im Bereich der Unterhaltungs- und Kommunikationselektronik -, so reicht die mit haftklebrigen Systemen erzielbare Klebkraft oft nicht aus, um eine stabile Verbindung zu gewährleisten. Bei solchen Systemen kommen daher Hitze-aktiviert verklebende Klebemassen zum Einsatz, die heiß verklebt werden und nach dem Erkalten eine mechanisch belastbare Verbindung bieten.

Hitze-aktiviert verklebende Klebemassen lassen sich grundsätzlich in zwei Kategorien einordnen: thermoplastische Hitze-aktiviert verklebende Klebemassen und reaktive Hitze-aktiviert verklebende Klebemassen.

Thermoplastische Klebemassen basieren auf Polymeren, die bei einem Erwärmen reversibel erweichen und während des Erkaltens wieder erstarren. Nachteilig ist daran, dass solche thermoplastischen Klebemassen bei Anwendung von Druck ein ungünstiges Fließverhalten aufweisen können (so genanntes "Oozing"). Die unter Druck eintretende Formveränderung der Klebemasse macht den Einsatz von thermoplastischen Hitze-aktiviert verklebenden Klebemassen zur Verklebung feiner Strukturen unvorteilhaft, da die Klebemasse hier aus der dünnen Klebefuge heraustreten kann.

Reaktive Hitze-aktiviert verklebende Klebemassen hingegen enthalten elastische Komponenten und reaktive Komponenten. Letztere sind die so genannten "Reaktivharze", in denen durch das Erwärmen ein Vernetzungsprozess eingeleitet wird, der nach Beendigen der Vernetzungsreaktion eine dauerhafte stabile Verbindung auch unter Druck gewährleistet. Als elastische Komponenten sind insbesondere synthetische Nitrilkautschuke von Interesse, die der Hitze-aktiviert verklebenden Klebemasse infolge ihrer hohen Fließviskosität eine auch unter Druck besonders hohe Dimensionsstabilität verleihen.

Eine derartiges geringes Fließvermögen mit einer hohen Dimensionsstabilität kann aber auch mit Nachteilen verbunden sein, da die Hitze-aktiviert verklebende Klebemasse bei tiefen Temperaturen sehr schnell erstarrt und spröde wird. Dies hat zur Folge, dass die Verklebung bei tiefen Temperaturen gegenüber äußerer Einwirkung mechanisch empfindlich ist und sich daher bereits bei Stößen geringer Intensität lösen kann. Eine derartige Stoßempfindlichkeit (Schockempfindlichkeit) bei tiefen Temperaturen ist insbesondere zur Verklebung von Bauteilen in tragbaren Vorrichtungen unerwünscht, da solche Vorrichtungen auch im Außenbereich eingesetzt werden und dort sowohl hohen als auch tiefen Temperaturen ausgesetzt sein können.

Stoßempfindlichkeit ist besonders problematisch für Verbindungen von Metallsubstraten mit Kunststoffoberflächen, da der Kunststoff bei einem Stoß zwar einen Teil der Energie absorbieren kann, das Metall sich jedoch häufig nicht verformt, weshalb der größte Teil der Stoßenergie von dem Hitze-aktiviert verklebbaren Flächenelement aufgenommen werden muss.

Hinzu kommt, dass die Stabilität eines Hitze-aktiviert verklebbaren Flächenelements mit zwei unterschiedlichen Klebemassen - mit einer Klebemasse für die Verklebung auf einem metallischen Haftgrund und einer weiteren zur Verklebung auf einer Kunststoffoberfläche - ohnehin in hohem Maße von der jeweiligen Umgebungstemperatur abhängig ist. Dies ist auf die unterschiedliche Verankerung der beiden Klebemassen aneinander oder an einem gemeinsamen Träger zurückzuführen, insbesondere auf die bei beiden Klebemassen unterschiedlichen Abhängigkeiten des thermischen Ausdehnungsverhaltens, der Viskositäten oder der Struktur von der Temperatur. Da die Verankerungsflächen dieser Flächenelemente gerade bei niedrigen Temperaturen also eine nur geringe mechanische Belastbarkeit aufweisen, sind diese Verankerungsflächen besonders anfällig gegenüber Stößen, wodurch das Flächenelement an diesen Stellen besonders leicht spaltet.

Eine Aufgabe der vorliegenden Erfindung ist es daher, ein Hitze-aktiviert verklebbares Flächenelement mit einer ersten Klebemasse und einer zweiten Klebemasse zur Verfügung zu stellen, das diese Nachteile beseitigt und das insbesondere über einen breiten Temperaturbereich eine stoßunempfindliche und stabile Verklebung von Metallsubstraten mit Kunststoffsubstraten sowie eine hohe Dimensionsstabilität ermöglicht. Insbesondere soll ein Hitze-aktiviert verklebbares Flächenelement bereit gestellt werden, das bei -20 °C stoßunempfindlich ist und eine hohe Bindungsstärke zu Kunststoffoberflächen und Metalloberflächen in einem Temperaturbereich von -20 °C bis +50 °C bietet.

Diese Aufgabe wird erfindungsgemäß durch ein Hitze-aktiviert verklebbares Flächenelement mit einer ersten Klebemasse und einer zweiten Klebemasse gelöst, bei dem die erste Klebemasse mindestens einen synthetischen Nitrilkautschuk, nämlich den ersten Nitrilkautschuk, und zumindest ein Reaktivharz umfasst, das zur Vernetzung mit sich selbst, mit anderen Reaktivharzen und/oder mit dem zumindest einen synthetischen Nitrilkautschuk der ersten Klebemasse befähigt ist, wobei der erste Nitrilkautschuk einen Acrylnitrilanteil von mehr als 20 Gew.-% und weniger als 50 Gew.-% aufweist, bezogen auf die Gesamtmasse der Nitrilkautschuke in der ersten Klebemasse. Die zweite Klebemasse umfasst einen Blend aus mindestens drei synthetischen Nitrilkautschuken, nämlich dem zweiten Nitrilkautschuk, dem dritten Nitrilkautschuk und dem vierten Nitrilkautschuk, und zumindest ein Reaktivharz, das zur Vernetzung mit sich selbst, mit anderen Reaktivharzen und/oder mit zumindest einem der synthetischen Nitrilkautschuke der zweiten Klebemasse befähigt ist. Hierbei ist es notwendig, dass der Blend mikrophasensepariert ist, gekennzeichnet durch mindestens drei unterschiedliche Glasübergangstemperaturen im Thermogramm einer dynamischen Differenzkalorimetrie, und dass der Blend mindestens drei Glasübergangstemperaturen aufweist, darunter eine obere Glasübergangstemperatur von mehr als +10 °C, eine mittlere Glasübergangstemperatur und eine untere Glasübergangstemperatur von weniger als - 20 °C. Schließlich ist es erforderlich, dass der zweite Nitrilkautschuk einen Acrylnitrilanteil von 35 Gew.-% oder mehr aufweist, bezogen auf die Gesamtmasse der Nitrilkautschuke in der zweiten Klebemasse, dass der dritte Nitrilkautschuk einen Acrylnitrilanteil von mehr als 25 Gew.-% und weniger als 35 Gew.-% aufweist, bezogen auf die Gesamtmasse der Nitrilkautschuke in der zweiten Klebemasse; und dass der vierte Nitrilkautschuk einen Acrylnitrilanteil von 25 Gew.-% oder weniger aufweist, bezogen auf die Gesamtmasse der Nitrilkautschuke in der zweiten Klebemasse.

Durch diese Ausbildung wird sichergestellt, dass das Flächenelement sowohl auf metallischen Substraten als auch auf Substraten aus Kunststoffen hervorragend haftet und gleichzeitig eine hohe Belastbarkeit der so erzielten Verklebung in einem breiten Temperaturbereich ermöglicht. Insbesondere ist die erste Klebemasse für eine Verklebung des Flächeelements mit Metalloberflächen geeignet und die zweite Klebemasse für eine Verklebung des Flächeelements mit Kunststoffoberflächen. Beide Klebemassen weisen unter Druck und auch über einen großen Temperaturbereich, das heißt sowohl bei niedrigen Temperaturen als auch bei hohen Temperaturen, eine hohe Klebkraft auf den jeweiligen Substraten und gute Dimensionsstabilität auf.

Besonders günstig ist es außerdem, wenn der zweite Nitrilkautschuk der zweiten Klebemasse eine im Thermogramm einer dynamischen Differenzkalorimetrie bestimmte Glasübergangstemperatur von -20 °C oder höher aufweist, vorzugsweise von -15 °C oder höher.

Infolge der hinsichtlich des Aufbaus besonderen Abstimmung beider Klebemassen aufeinander weist ein mit diesen beiden Klebemassen doppelseitig beschichtetes Hitze-aktiviert verklebbares Flächenelement eine Klebkraft auf, die über einen großen Temperaturbereich und unter Druck in etwa gleich groß bleibt. Diese hohe Klebkraft ist nicht bloß an der Verklebungsfläche mit den jeweiligen Substraten, sondern auch an der Verankerungsfläche auf dem Flächenelement gegeben, die zwischen den beiden Klebemassen vorhanden ist, da beide Klebemassen auch im Hinblick auf ihr Temperaturverhalten aufeinander abgestimmt sind. Somit bietet dieser Aufbau eine insgesamt stabile Verklebung des Flächenelements bei unterschiedlichen Anwendungsbedingungen, ohne dass es zu einem Ablösen einer der Klebemassen von dem Substrat oder von dem Flächenelement kommt.

In einer vorteilhaften Ausgestaltungsform ist zumindest ein Teil der Oberfläche der ersten Klebemasse mit einem Teil der Oberfläche der zweiten Klebemasse in Kontakt. Hierdurch wird eine stabile Verbindung der beiden aufeinander abgestimmten Klebemassen erhalten und ein Ablösen beider Klebemassen von dem Flächenelement wirkungsvoll vermieden. Dies wird insbesondere dann erreicht, wenn das Flächenelement trägerfrei ausgebildet ist. Dies gewährleistet eine maximale Kontaktfläche zwischen den beiden Klebemassen und somit eine besonders große Verankerung aneinander.

Günstig ist es aber auch, wenn das Flächenelement einen porösen Träger umfasst. Durch die Verwendung eines Trägers wird eine besonders hohe Stoßunempfindlichkeit der mit dem Flächenelement erzielten Verklebung erreicht, da infolge der Eigenstabilität des Trägers dieser effizient Stoßenergie aufzunehmen vermag. Da der Träger zusätzlich porös ausgebildet ist, stehen beide Klebemassen miteinander in Kontakt und bewirken so eine besonders stabile Verankerung der Klebemassen aneinander und an dem Flächenelement.

Des weiteren ist es von Vorteil, wenn die mittlere Dicke einer ersten Klebeschichtung umfassend die erste Klebemasse und/oder die mittlere Dicke einer zweiten Klebeschichtung umfassend die zweite Klebemasse in einem Bereich von 5 µm bis 500 µm liegt, insbesondere, wenn diese in einem Bereich von 15 µm bis 300 µm liegt. Hierdurch wird eine besonders intensive Verbindung der Klebemassen mit dem Untergrund sichergestellt, indem die Klebemassen etwaige Unebenheiten in den Substratoberflächen ausgleichen können. Zusätzlich wird dadurch die Elastizität des Flächenelements zur Aufnahme von Stoßenergie verbessert.

Besonders geeignet ist das Flächenelement, wenn der zweite Nitrilkautschuk in der zweiten Klebemasse einen Acrylnitrilanteil von weniger als 60 Gew.-% aufweist, bezogen auf die Gesamtmasse der Nitrilkautschuke in der zweiten Klebemasse. Durch diese Materialwahl ist es möglich, eine vollständige Phasenseparierung innerhalb der zweiten Klebemasse zu vermeiden.

Von Vorteil ist es ferner, wenn in der zweiten Klebemasse der Masseanteil des zweiten Nitrilkautschuks zwischen 5 Gew.-% und 50 Gew.-% beträgt, bezogen auf die Gesamtmasse der Nitrilkautschuke in der zweiten Klebemasse, der Masseanteil des dritten Nitrilkautschuks zwischen 10 Gew.-% und 90 Gew.-% beträgt, bezogen auf die Gesamtmasse der Nitrilkautschuke in der zweiten Klebemasse, und der Masseanteil des vierten Nitrilkautschuks zwischen 5 Gew.-% und 50 Gew.-% beträgt, bezogen auf die Gesamtmasse der Nitrilkautschuke in der zweiten Klebemasse. Dies ermöglicht ein Optimum an Dimensionsstabilität der zweiten Klebemasse bei gleichzeitiger hoher Klebkraft der Klebemasse auf Kunststoffoberflächen.

Das Flächenelement ist außerdem besonders geeignet, wenn der Blend der zweiten Klebemasse eine mittlere Glasübergangstemperatur aufweist, die einen breit verteilten Glasübergangstemperaturbereich darstellt. Hierdurch wird ein allmählicher Übergang der klebtechnischen Eigenschaften erreicht, ohne dass dabei mit Diskontinuitäten oder Sprüngen zu rechnen ist.

Günstig ist es zudem, wenn als Reaktivharze Epoxidharze, Novolakharze, Melaminharze, Phenolharze, Terpenphenolharze und/oder Harze auf Basis von Polyisocyanaten eingesetzt werden. Hierdurch wird eine besonders stabile Vernetzung und damit eine besonders hohe Stabilität der Verklebung möglich.

Es ist außerdem vorteilhaft, wenn die Reaktivharze in der ersten Klebemasse und/oder in der zweiten Klebemasse zu einem Masseanteil von mindestens 25 Gew.-% und höchstens 75 Gew.-% vorliegen, jeweils bezogen auf die Gesamtmasse der Mischung aus den Nitrilkautschuken und den Reaktivharzen in der jeweiligen Klebemasse. Dadurch werden Klebemassen mit einer besonders hohen Dimensionsstabilität zur Verfügung gestellt.

Schließlich ist es günstig, wenn die erste Klebemasse und/oder die zweite Klebemasse Klebkraft-steigernde Harze umfasst, insbesondere zu einem Masseanteil von höchstens 25 Gew.-%, bezogen auf die Gesamtmasse der jeweiligen Klebemasse. Insbesondere ist hier die Verwendung von Reaktivharzen zu einem Anteil von mindestens 30 Gew.-% und höchstens 75 Gew.-% vorteilhaft, bezogen auf die Gesamtmasse von Nitrilkautschuken und Reaktivharz in der jeweiligen Klebemasse. Hierdurch kann die Klebkraft der Klebemassen auf dem jeweiligen Haftgrund entsprechend den Anforderungen gesteigert und eine hochstabile Verklebung gewährleistet werden.

Gemäß einem weiteren Aspekt der vorliegenden Erfindung wird die Verwendung eines Flächenelements nach einem der vorstehenden Ansprüche zur Verklebung eines Objekts mit Metalloberfläche mit einem Objekt mit Kunststoffoberfläche bereit gestellt, wobei die erste Klebemasse mit der Metalloberfläche verklebt wird und die zweite Klebemasse mit der Kunststoffoberfläche. Die Verwendung der bisher üblichen verklebbaren Flächenelemente bietet in der Praxis nur in einem engen Temperaturbereich eine hinreichende Verklebungsfestigkeit, bei unterschiedlichen Temperaturen hingegen lediglich eine geringe Verklebungsfestigkeit. Durch die Verwendung des oben beschriebenen Flächenelements wird eine Verbindung erhalten, die stabil und bei unterschiedlichen Umgebungsbedingungen mechanisch belastbar ist.

Außerdem wird die Verwendung des Flächenelements zur Verklebung von Dekorationselementen an Elektronikgeräten vorgeschlagen. Hierdurch ist es möglich, die Elektronikgeräte in ungeheizten Bereichen, etwa im Außenbereich, und in beheizten Räumen aufzubewahren, ohne dass eine Beeinträchtigung des Erscheinungsbildes infolge eines Ablösens der Dekorationselemente unter Belastung eintritt, wodurch insbesondere mobile Elektronikgeräte realisierbar sind.

In diesem Zusammenhang stellt die Erfindung ebenfalls ein Dekorationselement bereit, das bereits mit zumindest einem der obigen Flächenelemente zur Verklebung konfektioniert ist, sowie ein Elektronikgerät, das mit zumindest einem der obigen Flächenelemente zur Verklebung konfektioniert ist. Hierdurch wird es besonders einfach, Dekorationselemente an Elektronikgeräten zu verkleben und dabei eine in einem breiten Temperaturbereich belastbare Verbindung zu erhalten.

Als Flächenelemente werden alle üblichen flächenförmigen Gebilde angesehen, die eine Verklebung ermöglichen. Diese können verschieden ausgestaltet sein, insbesondere flexibel, beispielsweise als Band, Etikett oder Folie. Bei Hitze-aktiviert verklebbaren Flächenelementen handelt es sich um Flächenelemente, die heiß verklebt werden und nach dem Erkalten eine mechanisch belastbare Verbindung mit dem Klebegrund (Haftgrund; Untergrund; Substrat) bieten. Zu diesem Zweck sind die Hitze-aktiviert verklebbaren Flächenelemente einseitig oder beidseitig mit Hitze-aktiviert verklebenden Klebemassen ausgerüstet.

Vorliegend weisen die Hitze-aktiviert verklebbaren Flächenelemente zwei Hitze-aktiviert verklebende Klebemassen auf, eine erste Klebemasse und eine zweite Klebemasse. Von diesen beiden Klebemassen ist die erste Klebemasse hinsichtlich ihrer Zusammensetzung so gewählt, dass sie eine hohe Klebkraft an metallischen Oberflächen aufweist; diese erste Klebemasse ist an der ersten Oberfläche des Flächenelements angeordnet. Die zweite Klebemasse ist hinsichtlich ihrer Zusammensetzung hingegen so gewählt, dass sie eine hohe Klebkraft an Kunststoffoberflächen aufweist; diese zweite Klebemasse ist zumeist an der zweiten Oberfläche des Flächenelements angeordnet.

Die erste Klebemasse umfasst mindestens einen synthetischen Nitrilkautschuk - den ersten Nitrilkautschuk - und zumindest ein Reaktivharz. Neben diesen beiden Komponenten kann die erste Klebemasse natürlich auch noch weitere Bestandteile enthalten, so auch weitere Kautschuke oder sogar weitere Nitrilkautschuke.

Als synthetischer Nitrilkautschuk können alle üblichen geeigneten synthetischen Kautschuke auf Nitrilbasis verwendet werden, beispielsweise Nitrilbutadienkautschuke aus Acrylnitril und Butadien und/oder Nitrilchloroprenkautschuke aus Acrylnitril und Chloropren. Diese können unmodifiziert vorliegen oder auch modifiziert, etwa als epoxidierte Nitrilkautschuke oder als hydrierte Nitrilkautschuke.

Unter diesen sind insbesondere Nitrilbutadienkautschuke geeignet. Nitrilbutadienkautschuke sind unter den Bezeichnungen Europrene™ von Eni Chem, Krynac™ oder Perbunan™ von Bayer und Breon™ oder Nipol N™ von Zeon erhältlich. Hydrierte Nitrilbutadienkautschuke sind als Therban™ von Bayer und Zetpol™ von Zeon verfügbar. Derartige Nitrilbutadienkautschuke werden entweder heiß oder kalt polymerisiert.

Der erste Nitrilkautschuk weist einen Anteil an Acrylnitril von mehr als 20 Gew.-% und weniger als 50 Gew.-% auf, bezogen auf die Gesamtmasse der Nitrilkautschuke in der ersten Klebemasse. Dies umfasst gleichfalls Acrylnitril wie dessen Derivate.

In einer günstigen Weiterbildung weist der erste Nitrilkautschuk der ersten Klebemasse eine im Thermogramm einer dynamischen Differenzkalorimetrie bestimmte Glasübergangstemperatur von -20 °C oder höher auf, vorzugsweise von mehr als -15 °C. Die hier angegebenen Glasübergangstemperaturen entsprechen alle solchen, die aus quasistationären Experimenten erhalten sind. Als quasistationäres Verfahren wurde insbesondere eine dynamische Differenzkalorimetrie (englisch: Differential Scanning Calorimetry; DSC, nach DIN 53765, Aufheiz- und Abkühlrate 20 K/min) eingesetzt, in deren Thermogrammen die Glasübergangstemperaturen bestimmt wurden.

Ein weiteres Kriterium für die Auswahl des jeweiligen ersten Nitrilkautschuks stellt dessen Mooney-Viskosität dar, eine mit Hilfe eines Mooney-Viskosimeters bestimmte standardisierte Fließviskosität für Kautschukmassen. Da eine hohe Flexibilität bei tiefen Temperaturen gewährleistet sein soll, sollte die Mooney-Viskosität weniger als ML(1+4/100 °C) = 120 MU ("Mooney Units") betragen. Ein kommerzielles Beispiel für derartige Nitrilkautschuke ist etwa Nipol™ 40-5 der Firma Zeon Chemicals.

Ferner weist die erste Klebemasse ein Reaktivharz auf, das zur Vernetzung mit sich selbst, mit anderen Reaktivharzen und/oder mit dem zumindest einen synthetischen Nitrilkautschuk der ersten Klebemasse befähigt ist. Reaktivharze beeinflussen in einer Klebemasse die klebtechnischen Eigenschaften dieser Klebemasse infolge von chemischen Reaktionen. Als Reaktivharze können vorliegend alle üblichen Reaktivharze verwendet werden. Insbesondere können als Reaktivharze Epoxidharze, Novolakharze, Melaminharze, Phenolharze, Terpenphenolharze und/oder Harze auf Basis von Polyisocyanaten eingesetzt werden.

In einer günstigen Weiterbildung der Erfindung liegen dabei die Reaktivharze in der ersten Klebemasse zu einem Masseanteil von mindestens 25 Gew.-% und höchstens 75 Gew.-% vor, jeweils bezogen auf die Gesamtmasse der Mischung aus den Nitrilkautschuken und den Reaktivharzen in der jeweiligen Klebemasse.

Als Epoxidharze können alle geeigneten, dem Fachmann bekannten Epoxidharze eingesetzt werden, insbesondere polymere Epoxidharze mit einem mittleren Molekulargewicht M_{w} aus einem Bereich von 100 g/mol bis maximal 10.000 g/mol, etwa Glycidylester, Epichlorhydrin, das Reaktionsprodukt aus Epichlorhydrin und Bisphenol A und das Reaktionsprodukt aus Epichlorhydrin und p-Aminophenol. Bevorzugte kommerzielle Beispiele hierfür sind Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079, ebenfalls von Shell Chemical. Beispiele für kommerzielle aliphatische Epoxidharze sind Vinylcyclohexandioxide wie ERL-4206, ERL-4221, ERL-4201, ERL-4289 und ERL-0400 der Union Carbide Corp.

Als Novolakharze können alle geeigneten, dem Fachmann bekannten Novolakharze eingesetzt werden, beispielsweise Epi-Rez™ 5132 von Celanese, ESCN-001™ von Sumitomo Chemical, CY-281™ von Ciba Geigy, DEN™ 431, DEN™ 438, Quatrex™ 5010 von Dow Chemical, RE 305S von Nippon Kayaku, Epiclon™ N673 von DaiNipon Ink Chemistry und Epicote™ 152 von Shell Chemical.

Als Melaminharze können alle geeigneten, dem Fachmann bekannten Melaminharze eingesetzt werden, beispielsweise Cymel™ 327 und 323 von Cytec.

Als Phenolharze können alle geeigneten, dem Fachmann bekannten Phenolharze eingesetzt werden, beispielsweise YP 50 von Toto Kasei, PKHC™ von Union Carbide Corp. und BKR™ 2620 von Showa Union Gosei Corp. Weiterhin lassen sich als Reaktivharze auch Phenolresolharze einsetzen, unter anderem auch in Kombination mit anderen Phenolharzen.

Als Terpenphenolharze können alle geeigneten, dem Fachmann bekannten Terpenphenolharze eingesetzt werden, beispielsweise NIREZ™ 2019 von Arizona Chemical.

Als Harze auf Basis von Polyisocyanaten können alle geeigneten, dem Fachmann bekannten Harze auf Basis von Polyisocyanaten eingesetzt werden, beispielsweise Coronate™ L von Nippon Polyurethan Ind., Desmodur™ N3300 und Mondur™ 489 von Bayer.

Um die Reaktion zwischen den beiden Komponenten zu beschleunigen, kann die erste Klebemasse optional auch Vernetzer und Beschleuniger enthalten. Als Beschleuniger eignen sich alle dem Fachmann bekannten geeigneten Beschleuniger, etwa Imidazole, kommerziell erhältlich als 2M7, 2E4MN, 2PZ-CN, 2PZ-CNS, P0505 und L07N von Shikoku Chem. Corp. und als Curezol 2MZ von Air Products, sowie Amine, insbesondere tertiäre Amine. Als Vernetzer eignen sich alle dem Fachmann bekannten geeigneten Vernetzer, beispielsweise Hexamethylentetramin (HMTA).

Die zweite Klebemasse umfasst ein Blend aus mindestens drei synthetischen Nitrilkautschuken - dem zweiten Nitrilkautschuk, dem dritten Nitrilkautschuk und dem vierten Nitrilkautschuk - sowie zumindest ein Reaktivharz. Als Blend werden vorliegend alle Gemische oder Gemenge unterschiedlicher Komponenten verstanden. Neben diesen Komponenten kann die zweite Klebemasse natürlich auch noch weitere Bestandteile enthalten. Ferner kann das Blend zusätzlich zu den drei Nitrilkautschuken auch noch weitere Kautschuke oder sogar Nitrilkautschuke enthalten.

Erfindungsgemäß ist der Blend mikrophasensepariert. Als Mikrophasenseparation (auch Mikrophasenseparierung oder Mikrophasentrennung) wird das zumindest partielle Auftreten von Phasen unterschiedlicher Struktur innerhalb der Klebemasse bezeichnet, die nach einer chemischen Kopplung thermodynamisch unverträglicher Polymerkettenbereichen innerhalb der Klebemasse bei bestimmten Zusammensetzungen der Klebemasse eintreten kann ("Domänenbildung"). Dabei assoziieren thermodynamisch verträgliche Bereiche, während thermodynamisch unverträgliche Bereiche in räumlich separate Domänen segregieren, ohne dass es zu einer makroskopischen Phasentrennung kommt. Für die Erfindung ist es nicht erforderlich, dass die auftretende Mikrophasenseparation "ideale" Strukturen oder "unvollständige" Strukturen ergibt. Typische Verfahren, um das Vorliegen einer Mikrophasenseparation festzustellen, beinhalten beispielsweise Transmissionselektronenmikroskopie (TEM), Atomkraftmikroskopie (AFM), Streumethoden (etwa Neutronenstreuung oder Röntgenkleinwinkelstreuung) oder Messen einer NMR-Spindiffusion.

Bei Phasen mit unterschiedlichen Erweichungspunkten können zum Nachweis einer Mikrophasenseparation auch rheologische Methoden oder kalorimetrische Verfahren wie Differenzthermoanalyse (DTA) oder dynamische Differenzkalorimetrie (englisch: Differential Scanning Calorimetry; DSC) herangezogen werden. Als Kriterium für eine Mikrophasenseparation innerhalb des Blends wurde es vorliegend als hinreichend erachtet, dass in einer Untersuchung des Blends mittels dynamischer Differenzkalorimetrie jeweils mindestens drei unterschiedliche Glasübergangstemperaturen beobachtet wurden, genauer, in den bei dieser Untersuchung erhaltenen Datenkurven, den Thermogrammen.

Das Blend der zweiten Klebemasse weist mindestens drei Glasübergangstemperaturen auf, von denen die obere Glasübergangstemperatur mehr als +10 °C und die untere Glasübergangstemperatur weniger als -20 °C beträgt. Im vorliegenden Fall einer Mikrophasenseparation wird durch die Phase mit der geringsten Glasübergangstemperatur die Kaltschlagfestigkeit und die Adhäsion bei niedrigen Temperaturen bestimmt, während bei hohen Temperaturen die Verklebungsfestigkeit und die Dimensionsstabilität der Stanzlinge unter Druck und unter Temperatureinwirkung von der höchsten Glasübergangstemperatur bestimmt wird.

Die mittlere Glasübergangstemperatur ist vorzugsweise eine Glasübergangstemperatur, bei der ein Glasübergang (d.h. die Erweichung) nicht in einem engen Temperaturbereich sondern vielmehr in einem breiten Temperaturbereich allmählich eintritt. Daher handelt es sich in diesem Fall bei der mittleren Glasübergangstemperatur auch um einen breit verteilten Glasübergangstemperaturbereich.

Die Phase mit der höchsten Glasübergangstemperatur kann entweder den zweiten Nitrilkautschuk, den dritten Nitrilkautschuk oder den vierten Nitrilkautschuk umfassen. Dementsprechend ist die Phase mit der niedrigsten Glasübergangstemperatur einem anderen dieser Nitrilkautschuke zugeordnet und die Phase mit der mittleren Glasübergangstemperatur dem letzten der drei Nitrilkautschuke.

Als synthetische Nitrilkautschuke können alle üblichen geeigneten synthetischen Kautschuke auf Nitrilbasis verwendet werden, beispielsweise Nitrilkautschuke aus Acrylnitril und Butadien und/oder Nitrilchloroprenkautschuke aus Acrylnitril und Chloropren. Diese können unmodifiziert vorliegen oder auch modifiziert, etwa als epoxidierte Nitrilkautschuke oder als hydrierte Nitrilkautschuke.

Unter diesen sind insbesondere Nitrilbutadienkautschuke vorteilhaft. Nitrilbutadienkautschuke sind unter den Bezeichnungen Europrene™ von Eni Chem, Krynac™ oder Perbunan™ von Bayer und Breon™ oder Nipol N™ von Zeon erhältlich. Hydrierte Nitrilbutadienkautschuke sind als Therban™ von Bayer und Zetpol™ von Zeon verfügbar. Derartige Nitrilbutadienkautschuke werden entweder heiß oder kalt polymerisiert.

Der zweite Nitrilkautschuk weist einen Anteil an Acrylnitril von 35 Gew.-% oder mehr auf, bezogen auf die Gesamtmasse der Nitrilkautschuke in der zweiten Klebemasse. Dies umfasst gleichfalls Acrylnitril wie dessen Derivate. Ferner kann der zweite Nitrilkautschuk einen Acrylnitrilanteil von weniger als 60 Gew.-% aufweisen, bezogen auf die Gesamtmasse der zumindest drei Nitrilkautschuke in der zweiten Klebemasse, um eine vollständige Phasenseparierung zu vermeiden.

Der Masseanteil des zweiten Nitrilkautschuks wird innerhalb eines üblichen, dem Fachmann bekannten Bereichs gewählt und auf die jeweilige Zusammensetzung sowie entsprechend der beabsichtigten Verwendung angepasst. Vorteilhaft ist ein Masseanteil zwischen 5 Gew.-% und 50 Gew.-%, bezogen auf die Gesamtmasse der Nitrilkautschuke in der zweiten Klebemasse.

In einer günstigen Weiterbildung weist der zweite Nitrilkautschuk der zweiten Klebemasse eine Glasübergangstemperatur von -20 °C oder höher auf, vorzugsweise von mehr als -15 °C, um eine Mikrophasenseparierung zu erreichen.

Ein weiteres Kriterium für die Auswahl des jeweiligen zweiten Nitrilkautschuks stellt dessen Mooney-Viskosität dar. Da eine hohe Flexibilität bei tiefen Temperaturen gewährleistet sein soll, sollte die Mooney-Viskosität weniger als ML(1+4/100 °C) = 120 MU betragen. Ein kommerzielles Beispiel für derartige Nitrilkautschuke ist etwa Nipol™ 40-5 der Firma Zeon Chemicals.

Der dritte Nitrilkautschuk weist einen Anteil an Acrylnitril von mehr als 25 Gew.-% und weniger als 35 Gew.-% auf, bezogen auf die Gesamtmasse der Nitrilkautschuke in der zweiten Klebemasse. Dies umfasst gleichfalls Acrylnitril wie dessen Derivate. Ferner kann der dritte Nitrilkautschuk einen Acrylnitrilanteil von weniger als 60 Gew.-% aufweisen, bezogen auf die Gesamtmasse der zumindest drei Nitrilkautschuke in der zweiten Klebemasse, um eine vollständige Phasenseparierung zu vermeiden.

Der Masseanteil des dritten Nitrilkautschuks wird innerhalb eines üblichen, dem Fachmann bekannten Bereichs gewählt und auf die jeweilige Zusammensetzung sowie entsprechend der beabsichtigten Verwendung angepasst. Vorteilhaft ist ein Masseanteil zwischen 10 Gew.-% und 90 Gew.-%, bezogen auf die Gesamtmasse der Nitrilkautschuke in der zweiten Klebemasse.

In einer günstigen Weiterbildung weist der dritte Nitrilkautschuk der zweiten Klebemasse eine Glasübergangstemperatur von weniger als -20 °C auf, vorzugsweise von weniger als -25 °C, um eine Mikrophasenseparierung zu erreichen.

Ein weiteres Kriterium für die Auswahl des jeweiligen dritten Nitrilkautschuks stellt dessen Mooney-Viskosität dar. Da eine hohe Flexibilität bei tiefen Temperaturen gewährleistet sein soll, sollte die Mooney-Viskosität weniger als ML(1+4/100 °C) = 100 MU betragen. Ein kommerzielles Beispiel für derartige Nitrilkautschuke ist etwa Breon™ N33C50 der Firma Zeon Chemicals.

Der vierte Nitrilkautschuk weist einen Anteil an Acrylnitril von weniger als 25 Gew.-% auf, bezogen auf die Gesamtmasse der Nitrilkautschuke in der zweiten Klebemasse. Dies umfasst gleichfalls Acrylnitril wie dessen Derivate. Ferner kann der vierte Nitrilkautschuk einen Acrylnitrilanteil von mehr als 4 Gew.-% aufweisen, bezogen auf die Gesamtmasse der zumindest drei Nitrilkautschuke in der zweiten Klebemasse, um eine vollständige Phasenseparierung zu vermeiden.

Der Masseanteil des vierten Nitrilkautschuks wird innerhalb eines üblichen, dem Fachmann bekannten Bereichs gewählt und auf die jeweilige Zusammensetzung sowie entsprechend der beabsichtigten Verwendung angepasst. Vorteilhaft ist ein Masseanteil zwischen 5 Gew.-% und 50 Gew.-%, bezogen auf die Gesamtmasse der Nitrilkautschuke in der zweiten Klebemasse.

In einer günstigen Weiterbildung weist der vierte Nitrilkautschuk der zweiten Klebemasse eine Glasübergangstemperatur von weniger als -35 °C auf, vorzugsweise von weniger als -40 °C, um eine Mikrophasenseparierung zu erreichen.

Ein weiteres Kriterium für die Auswahl des jeweiligen vierten Nitrilkautschuks stellt dessen Mooney-Viskosität dar. Da eine hohe Flexibilität bei tiefen Temperaturen gewährleistet sein soll, sollte die Mooney-Viskosität weniger als ML(1+4/100 °C) = 100 MU betragen. Kommerzielle Beispiele für derartige Nitrilkautschuke ist etwa Nipol™ 1034-60 der Firma Zeon Chemicals.

Ferner weist die zweite Klebemasse zumindest ein Reaktivharz auf, das zur Vernetzung mit sich selbst, mit anderen Reaktivharzen und/oder mit zumindest einem der synthetischen Nitrilkautschuke der zweiten Klebemasse befähigt ist. Als Reaktivharze können vorliegend alle üblichen Reaktivharze verwendet werden. Insbesondere können als Reaktivharze Epoxidharze, Novolakharze, Melaminharze, Phenolharze, Terpenphenolharze und/oder Harze auf Basis von Polyisocyanaten eingesetzt werden.

In einer günstigen Weiterbildung der Erfindung liegen die Reaktivharze in der zweiten Klebemasse zu einem Masseanteil von mindestens 25 Gew.-% und höchstens 75 Gew.-% vor, jeweils bezogen auf die Gesamtmasse der Mischung aus den Nitrilkautschuken und den Reaktivharzen in der zweiten Klebemasse.

Als Epoxidharze können alle geeigneten, dem Fachmann bekannten Epoxidharze eingesetzt werden, insbesondere polymere Epoxidharze mit einem Molekulargewicht M_{W} aus einem Bereich von 100 g/mol bis maximal 10.000 g/mol, etwa Glycidylester, Epichlorhydrin, das Reaktionsprodukt aus Epichlorhydrin und Bisphenol A oder das Reaktionsprodukt aus Epichlorhydrin und p-Aminophenol. Bevorzugte kommerzielle Beispiele hierfür sind Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872, 1001, 1004, 1031 etc. von Shell Chemical und HPT™ 1071, HPT™ 1079, ebenfalls von Shell Chemical. Beispiele für kommerzielle aliphatische Epoxidharze sind Vinylcyclohexandioxide wie ERL-4206, ERL-4221, ERL-4201, ERL-4289 oder ERL-0400 der Union Carbide Corp.

Als Novolakharze können alle geeigneten, dem Fachmann bekannten Novolakharze eingesetzt werden, beispielsweise Epi-Rez™ 5132 von Celanese, ESCN-001 ™ von Sumitomo Chemical, CY-281™ von Ciba Geigy, DEN™ 431, DEN™ 438, Quatrex™ 5010 von Dow Chemical, RE 305S von Nippon Kayaku, Epiclon™ N673 von DaiNipon Ink Chemistry oder Epicote™ 152 von Shell Chemical.

Als Melaminharze können alle geeigneten, dem Fachmann bekannten Melaminharze eingesetzt werden, beispielsweise Cymel™ 327 und 323 von Cytec.

Als Phenolharze können alle geeigneten, dem Fachmann bekannten Phenolharze eingesetzt werden, beispielsweise YP 50 von Toto Kasei, PKHC™ von Union Carbide Corp. und BKR™ 2620 von Showa Union Gosei Corp.. Weiterhin lassen sich als Reaktivharze auch Phenolresolharze einsetzen, unter anderem auch in Kombination mit anderen Phenolharzen.

Als Terpenphenolharze können alle geeigneten, dem Fachmann bekannten Terpenphenolharze eingesetzt werden, beispielsweise NIREZ™ 2019 von Arizona Chemical.

Als Harze auf Basis von Polyisocyanaten können alle geeigneten, dem Fachmann bekannten Harze auf Basis von Polyisocyanaten eingesetzt werden, beispielsweise Coronate™ L von Nippon Polyurethan Ind., Desmodur™ N3300 und Mondur™ 489 von Bayer.

Um die Reaktion zwischen den beiden Komponenten zu beschleunigen, kann die zweite Klebemasse optional auch Vernetzer und Beschleuniger enthalten. Als Beschleuniger eignen sich alle dem Fachmann bekannten geeigneten Beschleuniger, etwa Imidazole, kommerziell erhältlich als 2M7, 2E4MN, 2PZ-CN, 2PZ-CNS, P0505, L07N von Shikoku Chem. Corp. und als Curezol 2MZ von Air Products, sowie Amine, insbesondere tertiäre Amine. Als Vernetzer eignen sich alle dem Fachmann bekannten geeigneten Vernetzer, beispielsweise Hexamethylentetramin (HMTA).

Zusätzlich zu den Nitrilkautschuken und den Reaktivharzen können die erste Klebemasse und/oder die zweite Klebemasse optional auch weitere Bestandteile enthalten, beispielsweise Weichmacher, Füllstoffe, Keimbildner, Blähmittel, Klebkraft-steigernde Additive und thermoplastische Additive, Compoundierungsmittel und/oder Alterungsschutzmittel.

Als Weichmacher können alle geeigneten, dem Fachmann bekannten Weichmacher verwendet werden, beispielsweise solche auf Basis von Polyglykolethern, Polyethylenoxiden, Phosphatestern, aliphatischen Carbonsäureestern und Benzoesäureestern, aromatischen Carbonsäureestern, höhermolekularen Diolen, Sulfonamiden und Adipinsäureestern.

Als Füllstoffe können alle geeigneten, dem Fachmann bekannten Füllstoffe verwendet werden, beispielsweise Fasern, Ruß, Zinkoxid, Titandioxid, Kreide, Kieselsäure, Silikate, Vollkugeln, Hohlkugeln oder Mikrokugeln aus Glas oder anderen Materialien.

Als Alterungsschutzmittel können alle geeigneten, dem Fachmann bekannten Alterungsschutzmittel verwendet werden, beispielsweise solche auf der Basis von primären und sekundären Antioxidantien oder Lichtschutzmitteln.

Als Klebkraft-steigernde Additive können alle geeigneten, dem Fachmann bekannten Klebkraft-steigernde Additive verwendet werden, beispielsweise Polyvinylformal, Polyvinylbutyral, Polyacrylatkautschuk, Chloroprenkautschuk, Ethylen-Propylen-DienKautschuk, Methyl-Vinyl-Silikon-Kautschuk, Fluorsilikonkautschuk, Tetrafluorethylen-Propylen-Copolymer-Kautschuk, Butylkautschuk oder Styrol-Butadien-Kautschuk. Polyvinylformale sind unter Formvar™ von Ladd Research erhältlich. Polyvinylbutyrale sind unter Butvar™ von Solucia, unter Pioloform™ von Wacker und unter Mowital™ von Kuraray erhältlich. Polyacrylatkautschuke sind unter Nipol AR™ von Zeon erhältlich. Chloroprenkautschuke sind unter Baypren™ von Bayer erhältlich. Ethylen-Propylen-Dien-Kautschuke sind unter Keltan™ von DSM, unter Vistalon™ von Exxon Mobil und unter Buna EP™ von Bayer erhältlich. Methyl-Vinyl-Silikon-Kautschuke sind unter Silastic™ von Dow Corning und unter Silopren™ von GE Silicones erhältlich. Fluorsilikonkautschuke sind unter Silastic™ von GE Silicones erhältlich. Butylkautschuke sind unter Esso Butyl™ von Exxon Mobil erhältlich. Styrol-Butadien-Kautschuke sind unter Buna S™ von Bayer, unter Europrene™ von Eni Chem und unter Polysar S™ von Bayer erhältlich.

Als thermoplastische Additive können alle geeigneten, dem Fachmann bekannten Thermoplaste verwendet werden, beispielsweise thermoplastische Materialien aus der Gruppe der Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierten Polymere wie etwa Polytetrafluorethylen, Polyamide, Ethylenvinylacetate, Polyvinylacetate, Polyimide, Polyether, Copolyamide, Copolyester, Polyacrylate und Polymethacrylate sowie Polyolefine wie etwa Polyethylen, Polypropylen, Polybuten und Polyisobuten.

Ferner lassen sich optional der ersten Klebemasse und/oder der zweiten Klebemasse zur Optimierung der klebtechnischen Eigenschaften und des Aktivierungsbereiches der Klebemasse Klebkraft-steigernde Harze hinzusetzten. Als Klebkraft-steigernde Harze sind ausnahmslos alle vorbekannten und in der Literatur beschriebenen Klebharze einsetzbar, beispielsweise Pinenharze, Indenharze und Kolophoniumharze, deren disproportionierte, hydrierte, polymerisierte und/oder veresterte Derivate und Salze, aliphatische und aromatische Kohlenwasserstoffharze, Terpenharze und Terpenphenolharze sowie C5-Kohlenwasserstoffharze, C9-Kohlenwasserstoffharze sowie andere Kohlenwasserstoffharze. Beliebige Kombinationen dieser und weiterer Harze können eingesetzt werden, um die Eigenschaften der resultierenden Klebemasse wunschgemäß einzustellen. Im allgemeinen lassen sich alle mit den Nitrilkautschuken kompatiblen Harze einsetzen, insbesondere alle aliphatischen, aromatischen oder alkylaromatischen Kohlenwasserstoffharze, Kohlenwasserstoffharze auf der Basis reiner Monomere, hydrierte Kohlenwasserstoffharze, funktionelle Kohlenwasserstoffharze sowie Naturharze; in diesem Zusammenhang sei auf die Darstellung des Wissensstandes im "Handbook of Pressure Sensitive Adhesive Technology" von Donatas Satas (van Nostrand, 1989) ausdrücklich hingewiesen. Die Klebkraft-steigernden Harze können der ersten Klebemasse und/oder der zweiten Klebemasse in beliebiger geeigneter Menge zugesetzt werden, wobei ein Masseanteil von maximal 25 Gew.-% üblich ist, bezogen auf die Gesamtmasse der jeweiligen Klebemasse.

Überdies kann die Klebkraft des Hitze-aktiviert verklebbaren Flächenelements durch weitere gezielte Additivierung gesteigert werden, etwa durch Verwendung von Polyimin-Copolymeren und/oder Polyvinylacetat-Copolymeren als klebkraftfördernde Zusätze. Die erste Klebemasse wird auf das Flächenelement als erste Klebeschichtung aufgetragen und die zweite Klebemasse als zweite Klebeschichtung. Dabei kann das Flächenelement trägerfrei ausgebildet sein, etwa in Form eines Transferklebebandes, oder aber einen Träger aufweisen, um dem Flächenelement eine höhere mechanische Stabilität zu verleihen. Ein derartiger Träger kann aus allen dem Fachmann geläufigen Materialien bestehen, beispielsweise aus Polymeren wie Polyester, Polyethylen, Polypropylen einschließlich modifiziertem Polypropylen wie etwa biaxial orientiertem Polypropylen (BOPP), Polyamid, Polyimid, Polyvinylchlorid oder Polyethylenterephthalat oder aus Naturstoffen; diese können als Gewebe, Gewirke, Gelege, Vliese, Papiere, Schaumstoffe, Folien und dergleichen ausgebildet sein oder auch aus Kombinationen daraus, etwa Laminaten oder Gewebefolien.

Um eine besonders gute Verankerung der Klebemassen an dem Flächenelement zu erzielen ist es sinnvoll, wenn die beiden Klebemassen einander berühren, indem ein Teil der Oberfläche der ersten Klebemasse mit einem Teil der Oberfläche der zweiten Klebemasse in Kontakt ist. Bei einer trägerfreien Ausgestaltung ist dies ohnehin der Fall. Wird hingegen ein Träger verwendet, so sollte dieser zur Verbesserung der Verankerung porös ausgebildet sein. Als Pore wird jede Öffnung beliebiger Größe in der Oberfläche des Trägers verstanden, die eine teilweise Durchdringung des Trägers mit Klebemassen gestattet, insbesondere eine durchgängige Öffnung, die also eine Seite des Trägers mit der anderen Seite des Trägers durchgängig verbindet, so dass beide Klebemassen über diese Poren miteinander in Kontakt sein können. Die zumeist bereits beim Auftragen vorhandene hohe Viskosität der Klebemassen erfordert hierbei, dass die Abmessungen dieser Poren groß genug sind, so dass die Klebemassen in die Poren hineingelangen können. Die Poren können herstellungsbedingt im Träger vorhanden sein - etwa bei Geweben, Gewirken, Gelegen, Vliesen, Papier oder Schaumstoffen - oder aber nach der Herstellung des Trägers in diesen gesondert eingebracht werden, etwa mittels Heißnadelung oder Laserperforierung von Trägerfolien.

Zur weiteren Verbesserung der Haftung kann der Träger überdies einseitig oder beidseitig mit einem Haftvermittler versehen sein, einem so genannten "Primer". Als derartige Haftvermittler lassen sich übliche Primersysteme einsetzen, etwa Heißsiegelkleber auf der Basis von Polymeren wie Ethylvinylacetat oder funktionalisierte Ethylvinylacetate oder auch Reaktivpolymere. Als funktionelle Gruppen lassen sich alle üblichen haftungssteigernden Gruppen einsetzen, etwa Epoxid-, Aziridin-, Isocyanat-oder Maleinsäureanhydridgruppen. Überdies können den Haftvermittlern auch zusätzliche vernetzende Komponenten beigefügt sein, beispielsweise Melaminharze oder Melamin-Formaldehyd-Harze. So sind unter anderem Haftvermittler auf der Basis von Polyvinylidenchlorid und Copolymerisaten von Vinylidendichlorid, insbesondere mit Vinylchlorid, gut geeignet (etwa Saran der Dow Chemical Company).

Mischungen der Nitrilkautschukkomponenten können in üblichen Verfahren als Feststoff, in Lösung oder in der Schmelze hergestellt werden. Für die Herstellung in Lösung werden bevorzugt Lösemittel eingesetzt, in denen zumindest eine der Komponenten der jeweiligen Klebemasse eine gute Löslichkeit aufweist.

Zum Abmischen der Nitrilkautschuke mit den weiteren Bestandteilen wie Reaktivharzen oder weiteren Zusatzstoffen können alle bekannten Misch- oder Rührtechniken eingesetzt werden. So können beispielsweise zur Herstellung einer homogenen Mischung statische oder dynamische Mischaggregate zum Einsatz gelangen. Je nach Zusammensetzung kann dafür der Eintrag von Wärme sinnvoll sein, wobei darauf zu achten ist, dass die Mischungstemperatur deutlich niedriger sein sollte als die Aktivierungstemperatur für reaktive Prozesse, etwa für eine Reaktion der Reaktivharze.

Eine Abmischung der Nitrilkautschukkomponenten kann aber auch in der Schmelze durchgeführt werden. Hierfür können etwa Kneter, Doppelschneckenextruder oder Planetwalzenextruder zum Einsatz kommen. Ebenfalls kann die Abmischung der Nitrilkautschuke mit den weiteren Bestandteilen in der Schmelze durchgeführt werden. Eine derartige Abmischung erfolgt bevorzugt in der Wärme, wobei auch hier die Mischungstemperatur deutlich niedriger sein sollte als die Aktivierungstemperatur für reaktive Prozesse im Mischaggregat.

Das Auftragen der ersten Klebemasse und/oder der zweiten Klebemasse auf das Flächenelement erfolgt nach herkömmlichen Verfahren. So kann etwa die jeweilige Klebemasse aus einer Lösung aufgetragen werden. Zum Lösen werden auch hier bevorzugt solche Lösemittel eingesetzt, in denen zumindest eine der Komponenten der jeweiligen Klebemasse eine gute Löslichkeit aufweist.

Für eine Auftragung der jeweiligen Klebemasse aus der Schmelze kann etwaig vorhandenes Lösemittel abgezogen werden, etwa in einem Aufkonzentrationsextruder unter vermindertem Druck. Hierzu können beispielsweise Einschneckenextruder oder Doppelschneckenextruder eingesetzt werden, die das Lösemittel in der gleichen Vakuumstufe oder in verschiedenen Vakuumstufen abdestillieren und gegebenenfalls über eine Vorwärmung der Einspeisung verfügen.

Nach dem Abmischen wird die jeweilige Klebemasse auf das Flächenelement aufgetragen. Die Auftragung selbst erfolgt mittels üblicher Vorrichtungen, etwa über eine Schmelzdüse oder eine Extrusionsdüse. Bei dieser Auftragung wird das Flächenelement jeweils einseitig mit der jeweiligen Klebemasse beschichtet. Eine so aus der aufgetragenen Klebemasse erhaltene flächenförmige Klebeschichtung kann das Flächenelement einseitig vollflächig bedecken oder aber lediglich lokal aufgetragen sein.

Die Auftragung der Klebemassen kann direkt auf das Flächenelement durchgeführt werden - etwa auf einen Träger oder eine andere, flächig ausgebreitete Klebeschicht. Stattdessen kann die Auftragung auch indirekt erfolgen, etwa unter Verwendung eines Prozessliners als temporären Träger oder eines Trennmittels erfolgen.

Als Prozessliner können alle dem Fachmann bekannten Prozessliner eingesetzt werden, etwa Trennfolien und Trennlacke. Trennfolien sind beispielsweise haftungsverminderte Folien auf der Basis von Polyethylen, Polypropylen, Polyethylenterephthalat, Polyethylennaphthalat, Polyimid oder von Mischungen dieser Materialien. Bei Trennlacken handelt es sich häufig um Silikonlacke oder fluorierte Lacke zur Haftungsverminderung.

Als Trennmittel können alle dem Fachmann bekannten geeigneten Trennmittel eingesetzt werden, etwa Trennpapiere oder Trennfolien. Übliche Trennpapiere sind etwa solche auf der Basis von in Hochdruckverfahren hergestellten Polyethylen (LDPE), in Niederdruckverfahren hergestelltem Polyethylen (HDPE), Pergamin oder Glassine. Übliche Trennfolien sind etwa solche auf der Basis von Folien aus Polyethylen, Polypropylen, Polyethylenterephthalat, Polyethylennaphthalat, Polyimid oder Mischungen dieser Materialien. Die Trennmittel können zur weiteren Haftungsverminderung zusätzlich mit einer Trennschicht ausgerüstet sein. Für eine Trennschicht eignen sich alle üblichen dem Fachmann bekannten Materialien, etwa Silikontrennlacke oder fluorierte Trennlacke. Zur Herstellung eines Flächenelements in einem direkten Verfahren kann beispielsweise in einem ersten Schritt eine der beiden Klebemassen auf die eine Seite eines Trägers aufgetragen werden und in einem zweiten Schritt die andere der beiden Klebemassen auf die andere Seite des Trägers. Alternativ kann in einer direkten Beschichtung etwa auch die eine Klebemasse in einem ersten Schritt auf ein Trennmittel aufgetragen werden und die andere Klebemasse in einem zweiten Beschichtungsschritt aus der Lösung oder aus der Schmelze direkt auf die eine Klebemasse, nämlich auf die nicht von dem Trennmittel bedeckte Seite der einen Klebemasse. Auf letztere Weise wird ein trägerfreies Flächenelement erhalten, beispielsweise ein Transferklebeband.

Bei einer indirekten Auftragung werden beide Klebemassen zunächst getrennt voneinander auf einen Prozessliner oder ein Trennmittel aufgetragen und erst in einem anschließenden Schritt miteinander verbunden. Um eine besonders effiziente Haftung der beiden Klebemassen aneinander zu erzielen, können im letzten Schritt zwei auf temporäre Träger aufgetragene Klebeschichtungen in einem Heißlaminierverfahren unter Druck und Temperatur direkt aufeinander kaschiert werden, etwa mittels eines Heiss-Roll-Laminators. Das Produkt kann dann als Doppelliner-Produkt weiterverarbeitet werden. Alternativ kann einer der beiden Prozessliner wieder auskaschiert werden.

Selbstverständlich können beide Klebemassen auch in einem gemeinsamen Verfahrensschritt direkt miteinander oder mit einem gemeinsamen Träger verbunden werden, etwa im Rahmen einer Coextrusion.

Je nach konkreter Anwendung kann die mittlere Dicke der ersten Klebeschichtung umfassend die erste Klebemasse und/oder der zweiten Klebeschichtung umfassend die zweite Klebemasse beliebig gewählt werden; üblich ist jeweils eine mittlere Dicke aus einem Bereich von 5 µm bis 500 µm, insbesondere aus einem Bereich von 15 µm bis 300 µm. Um eine optimale Beschichtungsdicke zu gewährleisten, kann das Flächenelement mit der Klebemasse zusätzlich gereckt werden. Die erste Klebeschichtung und die zweite Klebeschichtung können im Hinblick auf ihre mittlere Dicke identisch sein oder aber sich unterscheiden.

Ein derartiges Hitze-aktiviert verklebbares Flächenelement ist zum stabilen Verbinden von Objekten mit Metalloberfläche an Objekten mit Kunststoffoberfläche geeignet. Eine bei unterschiedlichen Temperaturen mechanisch belastbare Verklebung wird erhalten, wenn die erste Klebemasse mit der Metalloberfläche verklebt wird und die zweite Klebemasse mit der Kunststoffoberfläche. Als Metalle werden alle üblichen Metalle eingesetzt, insbesondere Stahl, Edelstahl, Edelmetall, verchromtes Kupfer oder Nickel, Aluminium sowie metallierte Kunststoffteile. Als Kunststoffe finden alle üblichen Kunststoffe Verwendung, etwa Polyvinylchlorid, Acrylnitril-Butadien-Styrol-Copolymere oder Polycarbonat sowie Mischungen basierend auf diesen Kunststoffen.

Insbesondere ist das Flächenelement für eine Verklebung von Dekorationselementen auf Elektronikgeräten günstig. Als Dekorationselemente werden sämtliche Elemente angesehen, die das äußere Erscheinungsbild eines Gegenstands gezielt und in gewünschter Weise gestatten oder mitbestimmen sollen; dies schließt eine zusätzliche funktionale Bedeutung der Dekorationselemente nicht aus, beispielsweise als Handhabungseinrichtung oder als Abschirmung gegenüber elektromagnetischer Strahlung. Als Elektronikgerät werden alle Arten an Elektronikgeräten verstanden, also auch solche aus der industriellen Technik und Geräte der Unterhaltungsindustrie. Im Hinblick auf letztere sei etwa auf mobile Konsumerelektronikartikel hingewiesen, etwa zur Datenaufzeichnung, Datenbearbeitung, Datenwiedergabe oder zur Telekommunikation.

Sowohl Dekorationselemente als auch Elektronikgeräte können hierbei mit Hitze-aktiviert verklebbaren Flächenelementen konfektioniert vorliegen, indem die eine Klebemasse des Flächenelements mit dem ersten Verbindungskörper- dem Dekorationselement oder dem Elektronikgerät - verbunden wird und so bis zur Verklebung mit dem entsprechenden Gegenstück als zweiten Verbindungskörper gelagert werden kann. Die andere, zur Verklebung an den zweiten Verbindungskörper vorgesehene Klebemasse am halbverklebten Flächenelement kann zur Lagerung mit einem temporären Träger abgedeckt sein. Die Verbindung mit dem ersten Verbindungskörper kann dabei vorläufig oder permanent sein. Bei einer vorläufigen Verbindung werden beide Klebemassen gleichzeitig aktiviert, und zwar erst dann, wenn die andere Klebemasse mit dem zweiten Verbindungskörper in Kontakt gebracht wurde. Bei einer permanenten Verbindung ist die zur Aktivierung der einen Klebemasse erforderliche Temperatur vorteilhafterweise niedriger als die Temperatur zur Aktivierung der anderen Klebemasse. Dadurch wird bei Aktivierung der einen Klebemasse die andere Klebemasse noch nicht aktiviert. Somit kann die andere Klebemasse noch nach Verbinden mit dem zweiten Verbindungskörper in einem zweiten Schritt aktiviert werden. Die Aktivierung erfolgt thermisch für eine bestimmte Aktivierungszeit und zumeist unter Druckbelastung der Verbindung.

Weitere Vorteile und Anwendungsmöglichkeiten gehen aus den Untersuchungen zu einigen rein illustrativen Ausführungsbeispielen hervor, die anhand der beigefügten Zeichnungen im folgenden näher beschrieben werden sollen. Dabei zeigt
Fig. 1 eine schematische Darstellung des experimentellen Aufbaus zur Untersuchung der Stoßfestigkeit einer mit dem erfindungsgemäßen Flächenelement erhaltenen Verklebung,
Fig. 2 eine schematische Darstellung des experimentellen Aufbaus zur Untersuchung der Verklebungsfestigkeit einer mit dem erfindungsgemäßen Flächenelement erhaltenen Verklebung,
Fig. 3 eine schematische Darstellung eines Ausführungsbeispiels einer Verklebung des erfindungsgemäßen Flächenelements mit Hilfe einer Heizpresse, und
Fig. 4 die schematische Darstellung einer mit dem erfindungsgemäßen Flächenelement erzielten Verklebung eines Kunststoffsubstrats mit einem Metallsubstrat in einem Praxistest zur Torsionsfestigkeit.

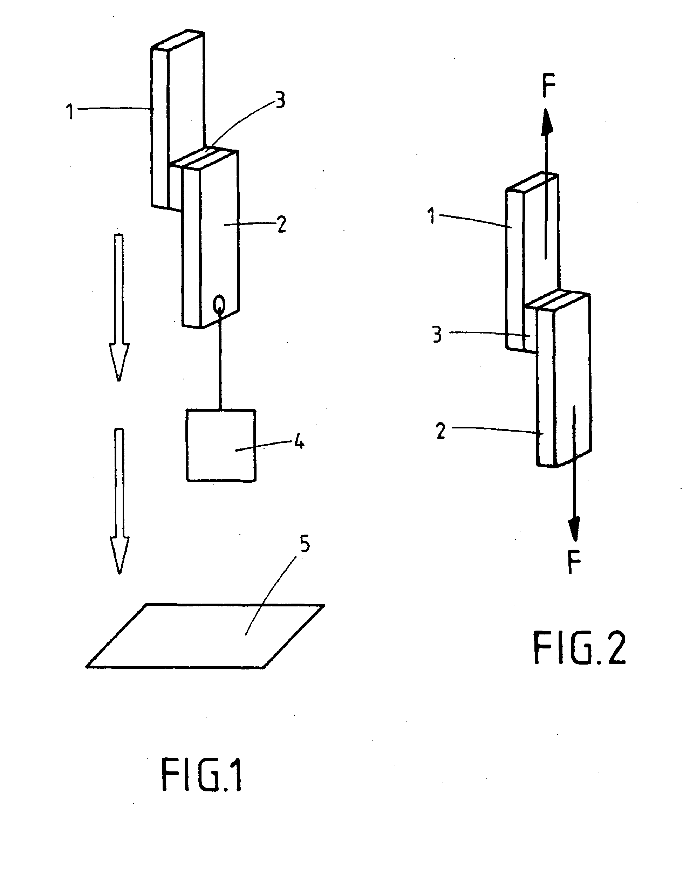

Untersuchungen zur Stoßfestigkeit einer Verklebung zwischen einem metallischen Prüfkörper und einem Kunststoff-Prüfkörper wurden bei unterschiedlichen Prüfkörpertemperaturen mit dem in Fig. 1 dargestellten Aufbau durchgeführt. Als metallischer Prüfkörper wurde eine Aluminium-Platte 1 mit einer Länge von 100 mm, einer Breite von 20 mm und einer Stärke von 1,5 mm eingesetzt. Als Kunststoff-Prüfkörper wurde eine Polycarbonat-Platte 2 mit einer Länge von 100 mm, einer Breite von 20 mm und einer Stärke von 3,0 mm eingesetzt.

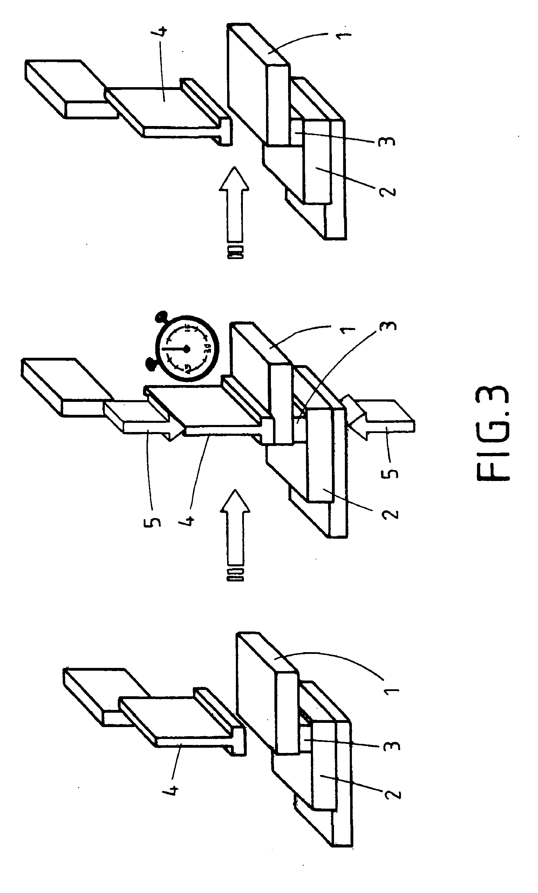

Zur Vorbereitung der Messung wurden beide Platten mit Hilfe eines Hitze-aktiviert verklebbaren Flächenelements 3 an ihren Schmalseiten 10 mm überlappend miteinander verklebt, wobei sich eine Verklebungsfläche von 200 mm² bildete. Hierfür wurde das Hitze-aktiviert verklebbare Flächenelement 3 mit einer Gesamtdicke von 200 µm in einem ersten Schritt mit der zur Verklebung mit Metalloberflächen angepassten Seite (bei den vorliegenden Ausführungsbeispielen die erste Klebemasse) mit Hilfe einer auf 95 °C erhitzten Heizplatte auf die Aluminium-Platte laminiert. Anschließend wurde die Trennfolie von der anderen Klebemasse abgezogen und mit der zur Verklebung mit Kunststoffoberflächen angepassten Seite (bei den vorliegenden Ausführungsbeispielen die zweite Klebemasse) an der Polycarbonat-Platte verklebt. Die endgültige Verklebung der Prüfkörper wurde in einer Heizpresse durchgeführt, wobei die Verklebungsstelle über die Aluminium-Seite erhitzt wurde. Die Hitze-Aktivierung wurde mit einem 180 °C heißen Heizpressstempel bei einem Druck von 5 bar und einer Verpressdauer von 5 s durchgeführt (Durchführung vgl. Fig. 3: Aluminium-Platte 1; Polycarbonat-Platte 2; Hitze-aktiviert verklebbares Flächenelement 3; Heizpressstempel 4; Druckrichtung 5; Ablauf von links nach rechts).

Der Prüfkörperverbund wurde jeweils sofort nach Verpressen und Hitze-Aktivierung auf die gewünschte Messtemperatur geheizt oder abgekühlt und bei dieser Temperatur für etwa 30 min equilibriert. Unmittelbar vor der Messung wurde an der Polycarbonat-Platte ein Massestück mit einer Masse von 50 g befestigt. Zur Bestimmung der Stoßfestigkeit wurden die Folgen eines Aufprall des gesamten Verbunds auf eine Stahlplatte 5 nach einem Fall aus unterschiedlichen Fallhöhen untersucht (Pfeile in Fig. 1 entsprechen der Fallrichtung). Dabei wurde jeweils die maximale Höhe bestimmt, bei der die Verklebung aus dem Hitze-aktiviert verklebbaren Flächenelement die Stoßenergie noch aufgenommen hat, ohne dass der Verbund der beiden Prüfkörper gelöst wurde. Der jeweilige Datenwert für die maximale Fallhöhe bei dieser Temperatur ergab sich als Mittelwert aus jeweils drei Einzelmessungen.

Die Stabilität und Verklebungsfestigkeit einer Verklebung von einem metallischen Prüfkörper und einem Kunststoff-Prüfkörper wurden bei unterschiedlichen Prüfkörpertemperaturen in einem dynamischen Schertest mit dem in Fig. 2 dargestellten Aufbau bestimmt. Als metallischer Prüfkörper wurde eine Aluminium-Platte 1 mit einer Länge von 100 mm, einer Breite von 20 mm und einer Stärke von 1,5 mm eingesetzt. Als Kunststoff-Prüfkörper wurde eine Polycarbonat-Platte 2 mit einer Länge von 100 mm, einer Breite von 20 mm und einer Stärke von 3,0 mm eingesetzt.

Zur Vorbereitung der Messung wurden beide Platten mit Hilfe eines Hitze-aktiviert verklebbaren Flächenelements 3 an ihren Schmalseiten 10 mm überlappend miteinander verklebt, wobei sich eine Verklebungsfläche von 200 mm² bildete. Hierfür wurde das Hitze-aktiviert verklebbare Flächenelement 3 mit einer Gesamtdicke von 200 µm in einem ersten Schritt mit der zur Verklebung mit Metalloberflächen angepassten Seite (bei den vorliegenden Ausführungsbeispielen die erste Klebemasse) mit Hilfe einer auf 95 °C erhitzten Heizplatte auf die Aluminium-Platte laminiert. Anschließend wurde die Trennfolie von der anderen Klebemasse abgezogen und mit der zur Verklebung mit Kunststoffoberflächen angepassten Seite (bei den vorliegenden Ausführungsbeispielen die zweite Klebemasse) auf die Polycarbonat-Platte verklebt. Die endgültige Verklebung der Prüfkörper wurde in einer Heizpresse durchgeführt, wobei die Verklebung über die Aluminium-Seite erhitzt wurde. Die Hitze-Aktivierung wurde mit einem 180 °C heißen Heizpressstempel bei einem Druck von 5 bar und einer Verpressdauer von 5 s durchgeführt (Durchführung vgl. Fig. 3: Aluminium-Platte 1; Polycarbonat-Platte 2; Hitze-aktiviert verklebbares Flächenelement 3; Heizpressstempel 4; Druckrichtung 5; Ablauf von links nach rechts).

Der Prüfkörperverbund wurde jeweils sofort nach Verpressen und Hitze-Aktivierung auf die gewünschte Messtemperatur geheizt oder abgekühlt und bei dieser Temperatur für etwa 30 min equilibriert. Anschließend wurde der nicht verklebte Endabschnitt jedes Prüfkörpers in der Aufnahme eines Zugbelastungsprüfgeräts (Fa. Zwick GmbH & Co. KG) befestigt und beide Prüfkörper mit einer Vorschubgeschwindigkeit von 10 mm/min auseinander gezogen (Pfeile F in Fig. 1 entsprechen den Zugrichtungen). Als Ergebnis wurde die flächenbezogene maximale Kraft (in N/mm²) erhalten, die erforderlich war, um die Verklebung zu lösen und die Prüfkörper voneinander zu trennen. Messungen wurden bei unterschiedlichen Temperaturen und Luftfeuchtigkeiten durchgeführt (bei -20 °C / 0 % relativer Luftfeuchtigkeit, bei 23 °C / 50 % relativer Luftfeuchtigkeit und bei 50 °C / 50 % relativer Luftfeuchtigkeit). Der jeweilige Datenwert für die maximale Zugbelastung bei dieser Temperatur ergab sich als Mittelwert aus jeweils drei Einzelmessungen.

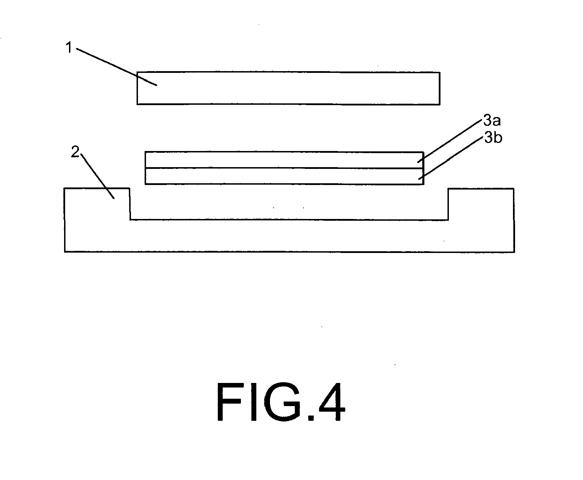

Als weiteres Maß für die Stabilität einer Verklebung von einem metallischen Prüfkörper und einem Kunststoff-Prüfkörper wurde die Torsionsfestigkeit dieser Verklebung bei niedrigen Temperaturen in einem in Fig. 4 schematisch wiedergegebenen Praxistest qualitativ untersucht. Hierzu wurde ein Hitze-aktiviert verklebbares Flächenelement 3a, 3b (mit der zur Verklebung mit der Metalloberfläche angepassten Klebeschichtung 3a und mit der zur Verklebung mit der Kunststoffoberfläche angepassten Klebeschichtung 3b) mit einer Gesamtdicke von 200 µm zur Verklebung eines Dekorationselements 1 aus Aluminium (so genannte "Handyschale") auf dem Polycarbonat-Gehäuse 2 eines Mobiltelefons verklebt. Die Verklebungsfläche betrug ungefähr 400 mm². Die Hitze-Aktivierung wurde in einer Heizpresse mit einem 180 °C heißen Heizpressstempel bei einem Druck von 5 bar und einer Verpressdauer von 5 s durchgeführt. Nach 24 h wurde der Verbund auf -20 °C herabgekühlt. Zur Untersuchung wurde einer der beiden Endabschnitte des Mobiltelefons fest eingespannt und der andere Endabschnitt gegenüber dem einen Endabschnitt verdreht. Der Torsionstest galt als bestanden, wenn sich die Verklebung zwischen Dekorelement 1 und Mobiltelefon 2 beim Verdrehen nicht löste.

Zur Herstellung von Proben der erfindungsgemäßen Hitze-aktiviert verklebbaren Flächenelemente ("Beispiele") sowie von Proben für herkömmliche Hitze-aktiviert verklebbare Flächenelemente ("Referenzbeispiele") wurden vier Klebemassen hergestellt, im Folgenden als Klebemasse A, Klebemasse B, Klebemasse C und Klebemasse D bezeichnet.

Dazu wurden die Nitrilkautschukkomponenten jeder Klebemasse zusammen mit einem Phenol-Novolak-Harz und einem Phenolresolharz als 30 %-ige Lösung in Methylethylketon in einen Kneter eingebracht und alles im Verlauf von 20 h miteinander vermischt. Neben 50 Gew.-% der jeweiligen Nitrilkautschuke enthielten die Klebemassen als Phenol-Novolak-Harz 40 Gew.-% Durez 33040 (abgemischt mit 8 Gew.-% HMTA; Fa. Rohm und Haas) und als Phenolresolharz 10 Gew.-% 9610 LW (Fa. Bakelite).

Die Klebemassen setzten sich wie folgt zusammen:
Klebemasse A (Verwendung als Beispiel für eine erste Klebemasse) enthielt als Nitrilkautschuk 50 Gew.-% Breon N36 C80 (Fa. Zeon).
Klebemasse B (Verwendung als weiteres Beispiel für eine erste Klebemasse) enthielt als Nitrilkautschuk 50 Gew.-% Nipol N1094-80 (Fa. Zeon).
Klebemasse C (Verwendung als Beispiel für eine zweite Klebemasse) enthielt als Nitrilkautschuk-Blend 17 Gew.-% Nipol 40-5 (Fa. Zeon), 17 Gew.-% Breon N33C50 (Fa. Zeon) und 16 Gew.-% Nipol 1034-60 (Fa. Zeon)
Klebemasse D (Verwendung als weiteres Beispiel für eine zweite Klebemasse) enthielt als Nitrilkautschuk-Blend 10 Gew.-% Nipol 40-5 (Fa. Zeon), 15 Gew.-% Breon N33C50 (Fa. Zeon), 30 Gew.-% Nipol 1034-60 (Fa. Zeon). Zusätzlich enthielt Klebemasse D weitere 5 Gew.-% des Phenol-Novolak-Harzes, also insgesamt 45 Gew.-% Durez 33040 (abgemischt mit 8 Gew.-% HMTA; Fa. Rohm und Haas).

Nach dem Mischen wurde die so erhaltene Hitze-aktiviert verklebende Klebemasse aus der Lösung auf ein Glassine-Trennpapier aufgestrichen und für 10 min bei 100 °C getrocknet. Nach dem Trocknen betrug die Schichtdicke 100 µm.

Zur Herstellung der Proben für die Beispiele wurden jeweils zwei der auf den Trennpapieren ausgestrichenen Klebemassen A, B, C und D ausgewählt und an den nicht mit Trennpapieren abgedeckten Seiten miteinander verbunden, so dass jeweils trägerfreie zweiseitig verklebbare Flächenelemente erhalten wurden. Hierfür wurden die auf den Trennpapieren ausgestrichenen Klebemassen mit einem Heiss-Roll-Laminator bei einer Arbeitstemperatur von 140 °C und einem Anpressdruck von 3 bar zusammenkaschiert. Die Gesamtdicke der so hergestellten zweiseitig verklebbaren Flächenelemente betrug nach der Laminierung 200 µm.
Für Beispiel 1 wurden Polymer A und Polymer C zusammenkaschiert.
Für Beispiel 2 wurden Polymer A und Polymer D zusammenkaschiert.
Für Beispiel 3 wurden Polymer B und Polymer C zusammenkaschiert.
Für Beispiel 4 wurden Polymer B und Polymer D zusammenkaschiert.
Für Referenzbeispiel 5 wurde ein kommerzieller thermoplastischer Copolyester auf einem Träger mit einer Schichtdicke von insgesamt 150 µm eingesetzt (3M 615S™ von 3M).

Für Referenzbeispiel 6 wurde ein kommerzielles thermoplastisches Copolyamid mit einer Schichtdicke von 40 µm (tesa™ 8440 der tesa AG) und Polymer A mit einer Dicke von 100 µm bei einer Arbeitstemperatur von 140 °C und einem Anpressdruck von 3 bar mit einem Heiss-Roll-Laminator zusammenkaschiert.

Als Referenzbeispiel 7 wurde Polymer A als einzelne Schicht ("single layer") mit einer Schichtdicke von 100 µm eingesetzt.

Als Referenzbeispiel 8 wurde Polymer B als einzelne Schicht ("single layer") mit einer Schichtdicke von 100 µm eingesetzt.

Die Ergebnisse der Untersuchungen zur Stoßfestigkeit der Verklebung sind in Tabelle 1 zusammengefasst. Wiedergegeben sind für unterschiedliche Proben die bei Raumtemperatur und bei -20 °C bestimmten maximalen Fallhöhen (in cm), bei denen eine Verklebung der Prüfkörper infolge des Aufpralls nicht gelöst wurde. Blieb die Verklebung auch bei der höchsten untersuchten Fallhöhe intakt, ist die Angabe als "größer als die höchste untersuchte Fallhöhe" zu interpretieren.

Für die Referenzbeispiele wurde ferner untersucht, an welchem Ort es bei einem Lösen der Verklebung zum Bruch der Verbindung gekommen ist. Erfolgte das Lösen zwischen den beiden Klebemassen, so ist der Messwert mit einem Stern versehen; erfolgte das Lösen zwischen der Klebemasse und Kunststoffoberfläche, so ist dies mit zwei Sternen hinter dem Messwert wiedergegeben.

**Tabelle 1:**

| | maximale Fallhöhe [cm] | |
|---|---|---|
| Messtemperatur | 23 °C | -20 °C |
| Beispiel 1 | > 150 | 120 |
| Beispiel 2 | > 150 | 110 |
| Beispiel 3 | > 200 | 100 |
| Beispiel 4 | > 200 | 110 |
| Referenzbeispiel 5 | 60 | 5 |
| Referenzbeispiel 6 | 60 | 5 * |
| Referenzbeispiel 7 | > 150 | 8 ** |
| Referenzbeispiel 8 | > 150 | 15 ** |

Tabelle 1 kann entnommen werden, dass Verklebungen aus Proben der erfindungsgemäßen Beispiele 1 bis 4 sowohl bei 23 °C als auch bei -20 °C einen Fall der Prüfkörper aus höheren Fallhöhen unbeschadet überstehen als die entsprechenden Referenzbeispiele, was auf eine signifikant höhere Stoßfestigkeit von Verklebungen mit den erfinderischen Flächenelementen schließen lässt. Dieser Effekt war insbesondere bei den bei niedrigen Temperaturen durchgeführten Messungen erheblich.

Wie bei Referenzbeispiel 6 erkennbar ist, tritt bei Verwendung zweier unterschiedlicher Klebemassen, die aufeinander kaschiert sind, ein Verbindungsbruch unter Stoßbelastung häufig an der Grenzfläche zwischen den beiden Klebemassen auf.

Aus Referenzbeispiel 7 und Referenzbeispiel 8 ist offenbar, dass dort unter Stoßbelastung ein Verbindungsbruch regelmäßig an der Grenzfläche zwischen der Klebemasse und dem Kunststoffsubstrat eintritt. Dies ist auf eine Inkompatibilität zurückzuführen, also eine nicht ausreichende Anpassung der Klebemassen an die jeweils erforderlichen Verklebungsbedingungen, die sich insbesondere in der Belastbarkeit im Tieftemperaturbereich auswirkt.

Die Ergebnisse der Untersuchungen zur Verklebungsfestigkeit sind in Tabelle 2 zusammengefasst. Wiedergegeben sind die bei Raumtemperatur, bei +50 °C und bei -20 °C für unterschiedliche Proben bestimmten und auf die Größe der Verklebungsfläche bezogenen maximalen Scherkräfte (in N/mm²), bei denen eine Verklebung der Prüfkörper noch nicht gelöst wurde.

Für die Referenzbeispiele wurde ferner untersucht, an welchem Ort es bei einem Lösen der Verklebung zum Bruch der Verbindung gekommen ist. Erfolgte das Lösen zwischen den beiden Klebemassen, so wurde der Messwert mit einem Stern versehen.

**Tabelle 2:**

| | flächenbezogene maximale Scherkraft [N/mm²] | | |
|---|---|---|---|
| Messtemperatur | +23 °C | +50 °C | -20 °C |
| Beispiel 1 | 5,3 | 1,5 | 6,2 |
| Beispiel 2 | 4,9 | 1,6 | 7,1 |
| Beispiel 3 | 5,4 | 1,8 | 7,0 |
| Beispiel 4 | 4,7 | 1,4 | 7,5 |
| Referenzbeispiel 5 | 4,0 | 0,6 | 5,3 |
| Referenzbeispiel 6 | 2,0 * | 0,3 * | 0,3 * |
| Referenzbeispiel 7 | 4,3 | 1,5 | 4,8 |
| Referenzbeispiel 8 | 3,9 | 1,0 | 5,5 |

Tabelle 2 kann entnommen werden, dass die Verklebungen mit Proben der erfindungsgemäßen Beispiele 1 bis 4 bei +23 °C, bei +50 °C und bei -20 °C einer höheren maximalen Scherkraft standhielten als die mit Proben der Referenzbeispiele und somit auch höhere Verklebungsfestigkeiten ermöglichten.

Bei +23 °C ist der Unterschied zwischen den Beispielen und den Referenzbeispielen ausgeprägt. Der große Unterschied zwischen den erfindungsgemäßen Flächenelementen und den Referenzbeispielen 7 und 8 zeigt, dass die bereits gute Verklebungsfestigkeit der Klebemasse alleine durch Verwenden eines zweischichtigen Aufbaus des Flächenelements mit zwei Klebemassen noch weiter gesteigert werden konnte.

Bei tiefen Temperaturen ist der Unterschied zwischen den Beispielen und den Referenzbeispielen ebenfalls deutlich und tritt bei Referenzbeispiel 6 sogar besonders deutlich zutage: Während eine Verklebung mit dem Flächenelement aus Referenzbeispiel 6 lediglich eine sehr geringe Stabilität zeigte, wiesen alle erfindungsgemäßen Verklebungen sogar höhere Verklebungsfestigkeiten auf als bei Raumtemperatur. In Verbindung mit der hervorragenden Stoßunempfindlichkeit verdeutlicht dies, dass die erfinderischen Beispiele tatsächlich ein hervorragendes Klebeverhalten auch bei tiefen Temperaturen besitzen.

Bei einer Messtemperatur von +50 °C war die Verklebungsfestigkeit bei den Beispielen und bei den Referenzbeispielen jeweils deutlich niedriger als die entsprechenden Werte bei niedrigeren Temperaturen. Dies kann mit der Abnahme der Viskosität bei Erhöhung der Temperatur erklärt werden und ist grundsätzlich bei allen Klebemassen zu erwarten. Erkennbar ist jedoch auch hier, dass Verklebungen mit den erfindungsgemäßen Beispielen insgesamt höhere Festigkeiten aufwiesen als die entsprechenden Verklebungen mit den Referenzbeispielen.

Wie aus Referenzbeispiel 6 erkennbar ist, tritt bei Verwendung zweier unterschiedlicher Klebemassen, die aufeinander kaschiert sind, auch unter Scherbelastung ein Verbindungsbruch häufig an der Grenzfläche zwischen den beiden Klebemassen auf.

Im Rahmen einer praxisorientierten qualitativen Untersuchung war zudem die Torsionsfestigkeit von Mobiltelefongehäuseschalen aus Aluminium untersucht worden, die mittels Hitze-aktiviert verklebbarer Flächenelemente an Mobiltelefongehäusen aus Polycarbonat befestigt wurden. Bei Verwendung der erfindungsgemäßen Beispiele 1 bis 4 konnten die Gehäuseschalen gegenüber den Mobiltelefongehäusen sogar bei Temperaturen von -20 °C gegeneinander verdreht werden, ohne dass ein Lösen der Verbindung beobachtet wurde. Bei Verwendung der Referenzbeispiele 5 und 6 lösten sich bei diesen Temperaturen hingegen die Gehäuseschalen vom Mobiltelefongrundkörper.

## Patentansprüche

1. Hitze-aktiviert verklebbares Flächenelement mit einer ersten Klebemasse und einer zweiten Klebemasse,
**dadurch gekennzeichnet, dass**
die erste Klebemasse mindestens einen synthetischen Nitrilkautschuk, nämlich den ersten Nitrilkautschuk, und zumindest ein Reaktivharz umfasst, das zur Vernetzung mit sich selbst, mit anderen Reaktivharzen und/oder mit dem zumindest einen synthetischen Nitrilkautschuk der ersten Klebemasse befähigt ist, wobei
der erste Nitrilkautschuk einen Acrylnitrilanteil von mehr als 20 Gew.-% und weniger als 50 Gew.-% aufweist, bezogen auf die Gesamtmasse der Nitrilkautschuke in der ersten Klebemasse,
die zweite Klebemasse einen Blend aus mindestens drei synthetischen Nitrilkautschuken, nämlich dem zweiten Nitrilkautschuk, dem dritten Nitrilkautschuk und dem vierten Nitrilkautschuk, und zumindest ein Reaktivharz umfasst, das zur Vernetzung mit sich selbst, mit anderen Reaktivharzen und/oder mit zumindest einem der synthetischen Nitrilkautschuke der zweiten Klebemasse befähigt ist, wobei
a) der Blend mikrophasensepariert ist, **gekennzeichnet durch** mindestens drei unterschiedliche Glasübergangstemperaturen im Thermogramm einer dynamischen Differenzkalorimetrie,
b) der Blend mindestens drei Glasübergangstemperaturen aufweist, darunter eine obere Glasübergangstemperatur von mehr als +10 °C, eine mittlere Glasübergangstemperatur und eine untere Glasübergangstemperatur von weniger als -20 °C,
c) der zweite Nitrilkautschuk einen Acrylnitrilanteil von 35 Gew.-% oder mehr aufweist, bezogen auf die Gesamtmasse der Nitrilkautschuke in der zweiten Klebemasse,
d) der dritte Nitrilkautschuk einen Acrylnitrilanteil von mehr als 25 Gew.-% und weniger als 35 Gew.-% aufweist, bezogen auf die Gesamtmasse der Nitrilkautschuke in der zweiten Klebemasse, und
e) der vierte Nitrilkautschuk einen Acrylnitrilanteil von 25 Gew.-% oder weniger aufweist, bezogen auf die Gesamtmasse der Nitrilkautschuke in der zweiten Klebemasse.

2. Flächenelement nach Anspruch 1, wobei ein Teil der Oberfläche der ersten Klebemasse mit einem Teil der Oberfläche der zweiten Klebemasse in Kontakt ist.

3. Flächenelement nach Anspruch 1 oder 2, wobei das Flächenelement trägerfrei ausgebildet ist.

4. Flächenelement nach Anspruch 1 oder 2, wobei das Flächenelement einen porösen Träger umfasst.

5. Flächenelement nach einem der vorstehenden Ansprüche, wobei die mittlere Dicke einer ersten Klebeschichtung umfassend die erste Klebemasse und/oder die mittlere Dicke einer zweiten Klebeschichtung umfassend die zweite Klebemasse in einem Bereich von 5 µm bis 500 µm liegt, insbesondere in einem Bereich von 15 µm bis 300 µm.

6. Flächenelement nach einem der vorstehenden Ansprüche, wobei der zweite Nitrilkautschuk der zweiten Klebemasse eine im Thermogramm einer dynamischen Differenzkalorimetrie bestimmte Glasübergangstemperatur von -20 °C oder höher aufweist, vorzugsweise von mehr als -15 °C.

7. Flächenelement nach einem der vorstehenden Ansprüche, wobei der zweite Nitrilkautschuk in der zweiten Klebemasse einen Acrylnitrilanteil von weniger als 60 Gew.-% aufweist, bezogen auf die Gesamtmasse der Nitrilkautschuke in der zweiten Klebemasse.

8. Flächenelement nach einem der vorstehenden Ansprüche, wobei der Masseanteil des zweiten Nitrilkautschuks zwischen 5 Gew.-% und 50 Gew.-% beträgt, bezogen auf die Gesamtmasse der Nitrilkautschuke in der zweiten Klebemasse,
der Masseanteil des dritten Nitrilkautschuks zwischen 10 Gew.-% und 90 Gew.-% beträgt, bezogen auf die Gesamtmasse der Nitrilkautschuke in der zweiten Klebemasse, und
der Masseanteil des vierten Nitrilkautschuks zwischen 5 Gew.-% und 50 Gew.-% beträgt, bezogen auf die Gesamtmasse der Nitrilkautschuke in der zweiten Klebemasse.

9. Flächenelement nach einem der vorstehenden Ansprüche, wobei der Blend der zweiten Klebemasse eine mittlere Glasübergangstemperatur aufweist, die einen breit verteilten Glasübergangstemperaturbereich darstellt.

10. Flächenelement nach einem der vorstehenden Ansprüche, wobei als Reaktivharze Epoxidharze, Novolakharze, Melaminharze, Phenolharze, Terpenphenolharze und/oder Harze auf Basis von Polyisocyanaten eingesetzt werden.

11. Flächenelement nach einem der vorstehenden Ansprüche, wobei die Reaktivharze in der ersten Klebemasse und/oder in der zweiten Klebemasse zu einem Masseanteil von mindestens 25 Gew.-% und höchstens 75 Gew.-% vorliegen, jeweils bezogen auf die Gesamtmasse der Mischung aus den Nitrilkautschuken und den Reaktivharzen in der jeweiligen Klebemasse.

12. Flächenelement nach einem der vorstehenden Ansprüche, wobei die erste Klebemasse und/oder die zweite Klebemasse klebkraftsteigernde Harze umfasst, insbesondere zu einem Masseanteil von höchstens 30 Gew.-%, bezogen auf die Gesamtmasse der jeweiligen Klebemasse.

13. Verwendung eines Flächenelements nach einem der vorstehenden Ansprüche zur Verklebung eines Objekts mit Metalloberfläche mit einem Objekt mit Kunststoffoberfläche, wobei die erste Klebemasse mit der Metalloberfläche verklebt wird und die zweite Klebemasse mit der Kunststoffoberfläche.

14. Verwendung eines Flächenelements nach einem der Ansprüche 1 bis 12 zur Verklebung von Dekorationselementen an Elektronikgeräten.

15. Dekorationselement mit zumindest einem Flächenelement nach einem der Ansprüche 1 bis 12.

16. Elektronikgerät mit zumindest einem Flächenelement nach einem der Ansprüche 1 bis 12.

## Claims

1. Heat-activatedly adhesively bondable substantially sheetlike element, having a first adhesive and a second adhesive,
**characterized in that**
the first adhesive comprises at least one synthetic nitrile rubber, namely the first nitrile rubber, and at least one reactive resin which is capable of crosslinking with itself, with other reactive resins and/or with the at least one synthetic nitrile rubber of the first adhesive,
the first nitrile rubber having an acrylonitrile fraction of more than 20% by weight and less than 50% by weight, based on the total mass of the nitrile rubbers in the first adhesive,
the second adhesive comprises a blend of at least three synthetic nitrile rubbers, namely the second nitrile rubber, the third nitrile rubber and the fourth nitrile rubber, and at least one reactive resin which is capable of crosslinking with itself, with other reactive resins and/or with at least one of the synthetic nitrile rubbers of the second adhesive,
a) the blend being microphase-separated, **characterized by** at least three different glass transition temperatures in a differential scanning calorimetry thermogram,
b) the blend having at least three glass transition temperatures, including an upper glass transition temperature of more than +10°C, a middle glass transition temperature and a lower glass transition temperature of less than -20°C,
c) the second nitrile rubber having an acrylonitrile fraction of 35% by weight or more, based on the total mass of the nitrile rubbers in the second adhesive,
d) the third nitrile rubber having an acrylonitrile fraction of more than 25% by weight and less than 35% by weight, based on the total mass of the nitrile rubbers in the second adhesive, and
e) the fourth nitrile rubber having an acrylonitrile fraction of 25% by weight or less, based on the total mass of the nitrile rubbers in the second adhesive.

2. Sheetlike element according to Claim 1, part of the surface of the first adhesive being in contact with part of the surface of the second adhesive.

3. Sheetlike element according to Claim 1 or 2, said sheetlike element being of carrier-free design.

4. Sheetlike element according to Claim 1 or 2, said sheetlike element comprising a porous carrier.

5. Sheetlike element according to any one of the preceding claims, the average thickness of a first adhesive coating comprising the first adhesive and/or the average thickness of a second adhesive coating comprising the second adhesive lying in a range from 5 µm to 500 µm, in particular in a range from 15 µm to 300 µm.

6. Sheetlike element according to any one of the preceding claims, the second nitrile rubber of the second adhesive having a glass transition temperature as determined in a differential scanning calorimetry thermogram of -20°C or higher, preferably of more than -15°C.

7. Sheetlike element according to any one of the preceding claims, the second nitrile rubber in the second adhesive having an acrylonitrile fraction of less than 60% by weight, based on the total mass of the nitrile rubbers in the second adhesive.

8. Sheetlike element according to any one of the preceding claims, the mass fraction of the second nitrile rubber being between 5% and 50% by weight, based on the total mass of the nitrile rubbers in the second adhesive,
the mass fraction of the third nitrile rubber being between 10% and 90% by weight, based on the total mass of the nitrile rubbers in the second adhesive, and
the mass fraction of the fourth nitrile rubber being between 5% and 50% by weight, based on the total mass of the nitrile rubbers in the second adhesive.

9. Sheetlike element according to any one of the preceding claims, the blend of the second adhesive having a middle glass transition temperature which represents a broadly distributed glass transition temperature range.

10. Sheetlike element according to any one of the preceding claims, reactive resins used comprising epoxy resins, novolak resins, melamine resins, phenolic resins, terpene phenolic resins and/or polyisocyanate-based resins.

11. Sheetlike element according to any one of the preceding claims, the reactive resins in the first adhesive and/or in the second adhesive being present at a mass fraction of at least 25% and not more than 75% by weight, based in each case on the total mass of the mixture of the nitrile rubbers and the reactive resins in the respective adhesive.

12. Sheetlike element according to any one of the preceding claims, the first adhesive and/or the second adhesive comprising bond strength enhancer resins, in particular at a mass fraction of not more than 30% by weight, based on the total mass of the respective adhesive.

13. Use of a sheetlike element according to any one of the preceding claims for bonding an object having a metal surface to an object having a plastic surface, the first adhesive being bonded to the metal surface and the second adhesive to the plastic surface.

14. Use of a sheetlike element according to any one of Claims 1 to 12 for bonding decorative elements to electronic devices.

15. Decorative element having at least one sheetlike element according to any one of Claims 1 to 12.

16. Electronic device having at least one sheetlike element according to any one of Claims 1 to 12.

## Revendications

1. Elément plat pouvant être collé par activation thermique présentant une première masse adhésive et une deuxième masse adhésive, **caractérisé en ce que** la première masse adhésive comprend au moins un caoutchouc nitrile de synthèse, à savoir le premier caoutchouc nitrile, et au moins une résine réactive, qui est apte à une réticulation avec elle-même, avec d'autres résines réactives et/ou avec ledit au moins un caoutchouc nitrile de synthèse de la première masse adhésive, où
le premier caoutchouc nitrile présente une proportion d'acrylonitrile de plus de 20% en poids et de moins de 50% en poids, par rapport à la masse totale du caoutchouc nitrile dans la première masse adhésive,
la deuxième masse adhésive comprend un mélange d'au moins trois caoutchoucs nitrile de synthèse, à savoir le deuxième caoutchouc nitrile, le troisième caoutchouc nitrile et le quatrième caoutchouc nitrile, et au moins une résine réactive, qui est apte à une réticulation avec elle-même, avec d'autres résines réactives et/ou avec ledit au moins un caoutchouc nitrile de synthèse de la deuxième masse adhésive, où
a) le mélange est séparé en microphases, **caractérisées par** au moins trois températures de transition vitreuse différentes dans le thermogramme d'une calorimétrie différentielle dynamique,
b) le mélange présente au moins trois températures de transition vitreuse, parmi lesquelles une température de transition vitreuse supérieure de plus de +10°C, une température de transition vitreuse moyenne et une température de transition vitreuse inférieure de moins de -20°C,
c) le deuxième caoutchouc nitrile présente une proportion d'acrylonitrile de 35% en poids ou plus, par rapport à la masse totale des caoutchoucs nitrile dans la deuxième masse adhésive,
d) le troisième caoutchouc nitrile présente une proportion d'acrylonitrile de plus de 25% en poids et de moins de 35% en poids, par rapport à la masse totale des caoutchoucs nitrile dans la deuxième masse adhésive, et
e) le quatrième caoutchouc nitrile présente une proportion d'acrylonitrile de 25% en poids ou moins, par rapport à la masse totale des caoutchoucs nitrile dans la deuxième masse adhésive.

2. Elément plat selon la revendication 1, où une partie de la surface de la première masse adhésive est en contact avec une partie de la surface de la deuxième masse adhésive.

3. Elément plat selon la revendication 1 ou 2, où l'élément plat est réalisé sans support.

4. Elément plat selon la revendication 1 ou 2, où l'élément plat comprend un support poreux.

5. Elément plat selon l'une quelconque des revendications précédentes, où l'épaisseur moyenne d'un premier revêtement adhésif, comprenant une première masse adhésive et/ou l'épaisseur moyenne d'un deuxième revêtement adhésif comprenant la deuxième masse adhésive se situe dans une plage de 5 µm à 500 µm, en particulier dans une plage de 15 µm à 300 µm.

6. Elément plat selon l'une quelconque des revendications précédentes, où le deuxième caoutchouc nitrile de la deuxième masse adhésive présente une température de transition vitreuse déterminée dans le thermogramme d'une calorimétrie différentielle dynamique de -20°C ou plus, de préférence de plus de -15°C.

7. Elément plat selon l'une quelconque des revendications précédentes, où le deuxième caoutchouc nitrile dans la deuxième masse adhésive présente une proportion d'acrylonitrile de moins de 60% en poids, par rapport à la masse totale des caoutchoucs nitrile dans la deuxième masse adhésive.

8. Elément plat selon l'une quelconque des revendications précédentes, où la proportion en masse du deuxième caoutchouc nitrile se situe entre 5% en poids et 50% en poids, par rapport à la masse totale des caoutchoucs nitrile dans la deuxième masse adhésive,
la proportion en masse du troisième caoutchouc nitrile se situe entre 10% en poids et 90% en poids, par rapport à la masse totale des caoutchoucs nitrile dans la deuxième masse adhésive, et
la proportion en masse du quatrième caoutchouc nitrile se situe entre 5% en poids et 50% en poids, par rapport à la masse totale des caoutchoucs nitrile dans la deuxième masse adhésive.

9. Elément plat selon l'une quelconque des revendications précédentes, où le mélange de la deuxième masse adhésive présente une température de transition vitreuse moyenne qui présente une plage de température de transition vitreuse largement répartie.

10. Elément plat selon l'une quelconque des revendications précédentes, où on utilise comme résines réactives des résines époxyde, novolaque, mélaminées, phénoliques, terpènephénoliques et/ou des résines à base de polyisocyanates.

11. Elément plat selon l'une quelconque des revendications précédentes, où les résines réactives se trouvent, dans la première masse adhésive et/ou dans la deuxième masse adhésive, en une proportion en masse d'au moins 25% en poids et d'au plus 75% en poids, à chaque fois par rapport à la masse totale du mélange des caoutchoucs nitrile et des résines réactives dans chaque matériau synthétique.

12. Elément plat selon l'une quelconque des revendications précédentes, où la première masse adhésive et/ou la deuxième masse adhésive comprend des résines augmentant l'adhésivité, en particulier à raison d'une proportion en masse d'au plus 30% en poids, par rapport à la masse totale de chaque masse adhésive.

13. Utilisation d'un élément plat selon l'une quelconque des revendications précédentes pour le collage d'un objet présentant une surface métallique avec un objet présentant une surface en matériau synthétique, où la première masse adhésive est collée avec la surface métallique et la deuxième masse adhésive avec la surface en matériau synthétique.

14. Utilisation d'un élément plat selon l'une quelconque des revendications 1 à 12 pour le collage d'éléments de décoration sur des appareils électroniques.

15. Elément de décoration avec au moins un élément plat selon l'une quelconque des revendications 1 à 12.

16. Appareil électronique avec au moins un élément plat selon l'une quelconque des revendications 1 à 12.
